(19) Europäisches Patentamt

European Patent Office

Office européen des brevets

(11) **EP 2 963 805 B1**

(12) **EUROPEAN PATENT SPECIFICATION**

(45) Date of publication and mention of the grant of the patent:
**19.09.2018 Bulletin 2018/38**

(51) Int Cl.:
*H02P 21/00* (2016.01)    *H02P 21/14* (2016.01)
*H02P 23/14* (2006.01)    *H02P 21/18* (2016.01)

(21) Application number: **15173314.4**

(22) Date of filing: **23.06.2015**

(54) **CONTROLLING AN AC MACHINE**

STEUERUNG EINER WECHSELSTROMMASCHINE

COMMANDE D'UNE MACHINE À COURANT ALTERNATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 GB 201411561**

(43) Date of publication of application:
**06.01.2016 Bulletin 2016/01**

(73) Proprietor: **Rolls-Royce plc**
**London SW1E 6AT (GB)**

(72) Inventors:
 • **Gajanayake, Chandana Jayampathi**
   **Derby, Derbyshire DE24 8BJ (GB)**
 • **Beng, Gilbert Foo Hock**
   **Derby, Derbyshire DE24 8BJ (GB)**
 • **Bhangu, Bikramjit Singh**
   **Derby, Derbyshire DE24 8BJ (GB)**
 • **Vilathgamuwa, Don Mahinda**
   **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(56) References cited:
 • XIAO D ET AL: "Sensorless direct torque and flux controlled IPM synchronous machine fed by matrix converter over a wide speed range", SENSORLESS CONTROL FOR ELECTRICAL DRIVES (SLED), 2011 SYMPOSIUM ON, IEEE, 1 September 2011 (2011-09-01), pages 19-26, XP032063451, DOI: 10.1109/SLED.2011.6051540 ISBN: 978-1-4577-1855-7
 • CASADEI D ET AL: "Control of induction motors for wide speed range for electric vehicle drives", ELECTRICAL MACHINES, 2008. ICEM 2008. 18TH INTERNATIONAL CONFERENCE ON, IEEE, PISCATAWAY, NJ, USA, 6 September 2008 (2008-09-06), pages 1-6, XP031436376, ISBN: 978-1-4244-1735-3
 • GIANMARIO PELLEGRINO ET AL: "Direct-Flux Vector Control of IPM Motor Drives in the Maximum Torque Per Voltage Speed Range", IEEE TRANSACTIONS ON INDUSTRIAL ELECTRONICS, IEEE SERVICE CENTER, PISCATAWAY, NJ, USA, vol. 59, no. 10, 1 October 2012 (2012-10-01), pages 3780-3788, XP011442489, ISSN: 0278-0046, DOI: 10.1109/TIE.2011.2178212

EP 2 963 805 B1

**Description**

Field of the Invention

This invention relates to a method of controlling an AC machine. The AC machine may be a permanent magnet synchronous machine (PMSM) which may, for example, be used in an electrical starter generator.

Background of the Invention

Electrical (AC) machines such as PMSMs are typically designed with a rated (or "base") speed, which may be defined as the speed at which the maximum torque is able to provide maximum power.

Operating an AC machine beyond the rated speed typically requires field weakening techniques mainly due to the voltage limitation of the power electronics inverter. In more detail, the power electronics inverter has a maximum voltage that can be produced based on the dc link voltage, but the AC machine produces a back electromotive force ("emf") based on the operating speed. If the AC machine needs to operate beyond the base speed, the flux linkage of the machine need to be reduced to allow the speed increase. This can be achieved using field weakening techniques. Field weakening techniques are well known.

One possible way to extend the operating range of an AC machine (beyond the rated speed) is to operate an inverter driving the AC machine in an overmodulation region, as this will help to maximize the dc link voltage utilization when achieving higher speeds.

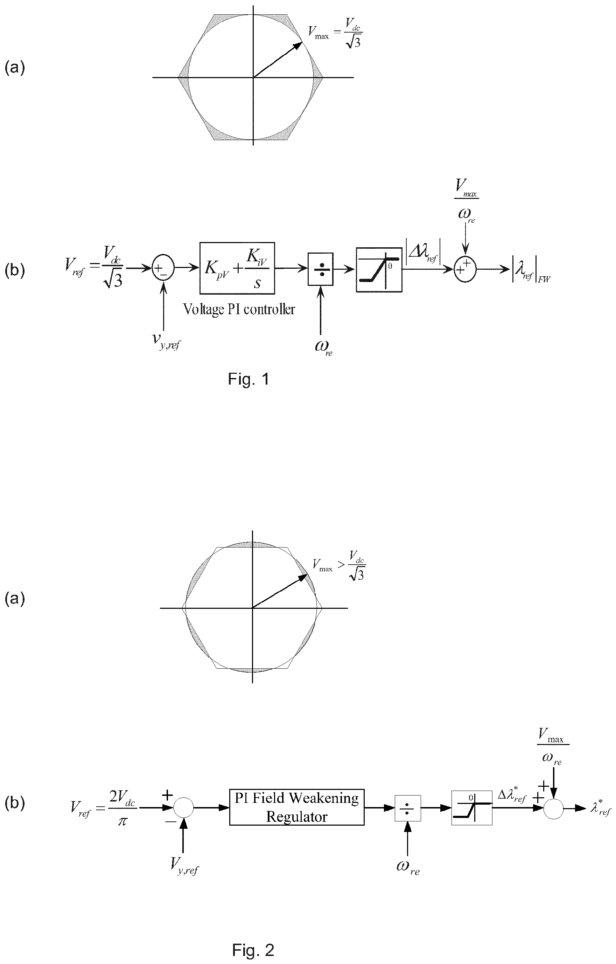

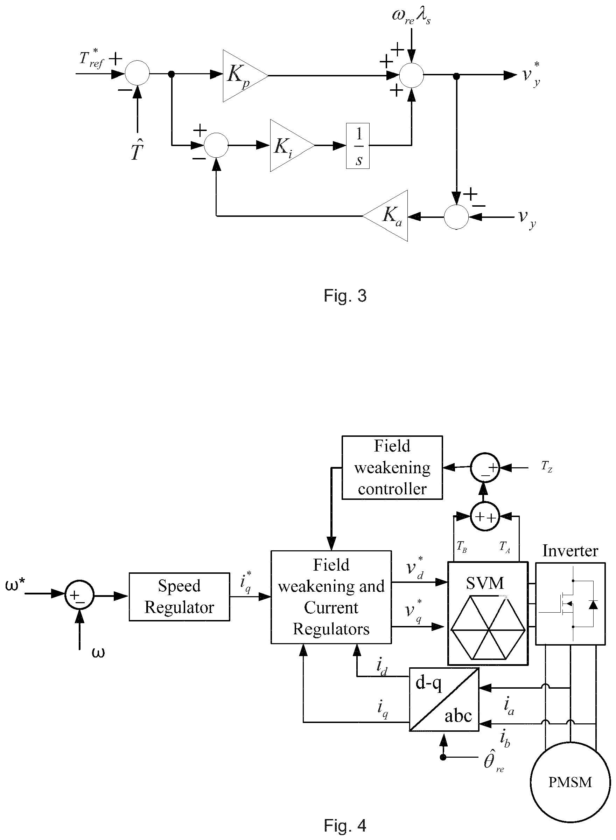

Overmodulation techniques have been derived for both Field Oriented Control (FOC) schemes and Direct Torque and Flux Control (DTFC) schemes. Overmodulation can be achieved using a simple strategy (e.g. by increasing a maximum voltage as shown in Fig. 2) or by a more convoluted strategy (e.g. using a "six step" over-modulation as shown in Fig. 4).

A problem with using an overmodulation technique is that it can cause non-optimal operation of the AC machine due to torque controller saturation (this applies to both DTFC and FOC schemes). This torque controller saturation problem can be solved using an anti-windup strategy.

A majority of industrial drives use an FOC scheme in the rotating (d-q) reference frame. In such a scheme, when the motor enters into the DFW operation the quadrature axis current (Iq) changes monotonously but direct axis current (Id) does not change monotonously. Where Id increases in the negative direction before entering into the DFW region, and then starts to decrease, this behaviour prevents the use of a single anti-windup strategy in the full operating range, whereas with DTFC both of the control variables are changing monotonously, hence overmodulation and anti-windup strategies used with an FOC scheme are not always directly comparable with those used for a DTFC scheme.

Sensorless Direct Torque and Flux Controlled IPM Synchronous Machine Fed by Matrix Converter over a Wide Speed Range, D. Xiao et al, 2011 Symposium on Sensorless Control for Electrical Drives, IEEE, describes a sensorless DTFC IPMSM drive fed by a matrix converter. Closed loop control of both torque and stator flux is achieved by using two PI controllers. The input power factor and output voltage vector are regulated with the indirect space vector modulation. An adaptive observer is used for joint stator flux and rotor speed estimation. At low speeds, the observer is enhanced by introducing a speed correction term derived from the error signal of HF signal injection for stable operation down to standstill. The operating range of the drive is extended into high speed region by incorporating field weakening. The proposed sensorless drive exhibits high dynamic and steady state performances over a wide range.

Xiao et al describe the use of an adaptive observer which outputs an estimated speed which is passed through a low-pass filter and before closing the speed control loop and provide reference torque for a torque PI controller which outputs $v_y$ of a reference voltage for controlling the stator voltages.

The present invention has been devised in light of the above considerations.

Summary of the Invention

The present invention is defined in claim 1.

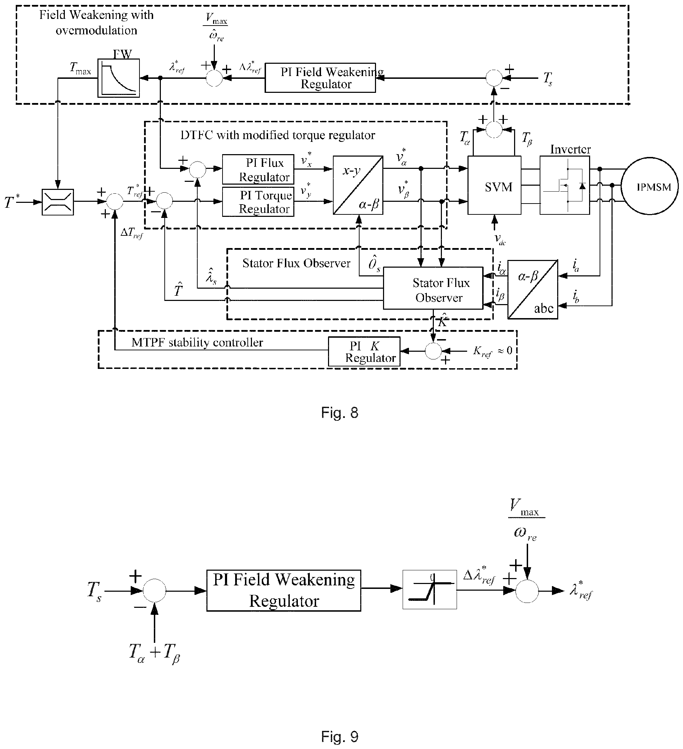

The inventor(s) have found that controlling the AC machine in this way helps to inhibit "windup" of a controller used to implement the method, even if the overmodulation technique sets a non-constant maximum voltage (e.g. as is the case for the overmodulation techniques discussed below with reference to Fig. 4 and Fig. 9).

Thus, the method preferably includes controlling the operation of the AC machine based on the filtered reference speed so as to inhibit windup of a controller used to implement the method.

Herein, the terms operating an AC machine "according to an overmodulation technique" or "in an overmodulation region" may be used interchangeably. A controller configured to operate an AC machine according to an overmodulation technique may be referred to as implementing an overmodulation technique.

Herein, "windup" of a controller can be understood as the inability of a controller to recover its function following a transient condition. In the context of a PI controller, "windup" could be caused by the PI controller continuing to accumulate an error that prevents to PI controller recovering its function following a transient condition.

Herein, a controller configured to control the operation of an AC machine so as to inhibit windup of the controller may be referred to as implementing an "anti-windup" technique.

Herein, the terms "technique", "strategy", "algorithm" or "method" may be used interchangeably.

Herein, when a given parameter is described as being "observed", it is intended to cover the possibilities of a value of the parameter that has been estimated as well as covering a value of the parameter that has been determined in some other way (e.g. by directly/indirectly measuring the parameter). For example, a given parameter may be "observed" based on one or more measurements from an apparatus including the AC machine and/or based on one or more parameters (e.g. reference values) used to control the AC machine.

The speed limit (used in filtering the reference speed) may be a speed limit of the AC machine, e.g. a maximum speed that can be achieved by the AC machine.

The method may include filtering the reference speed such that if the reference speed exceeds a speed limit of the AC machine, the reference speed is reduced to be no higher than that speed limit.

Determining the reference speed may be based on a comparison between an observed torque of the AC machine and a reference torque.

This may be particularly appropriate if the AC machine is controlled according to a direct torque control scheme or a direct torque and flux control scheme (see below), in which case the comparison between the observed torque of the AC machine and the reference torque may form part of the direct torque or direct toque and flux control scheme.

The comparison between the observed torque and the reference torque may, for example, be performed by a PI ("proportional-integral") controller.

The reference speed may be determined as a speed that will result in the AC machine achieving the reference torque.

Controlling the operation of the AC machine may be based on the filtered reference speed includes: producing a reference voltage based on the filtered reference speed; and controlling the operation of the AC machine based on the reference voltage.

The reference voltage may be obtained by multiplying the filtered reference speed by an observed flux linkage. The reference voltage may thus be $v_y^*$, discussed below ( $v_y^* = \omega_{S(\lim)}^* \lambda_S^*$ ).

The method may include controlling the operation of the AC machine based on the closed loop transfer function:

$$T = \frac{K_p s + K_i}{\frac{1}{K} s^2 + K_p s + K_i} \left\{ T^* - \frac{s + K_a K_i}{K_p s + K_i} \left( \omega_s^* - \omega_{s(\lim)} \right) \right\}$$

where: $T$ = an observed torque of the AC machine, $T^*$ = a reference torque used to control the AC machine, $\omega_s^*$ = the reference speed, $\omega_{s(\lim)}$ = the filtered reference speed, $K_p, K_i$ = PI regulator parameters, s represents the s domain or transfer function, $K$ = a stability parameter (described below).

The method may include controlling the AC machine according to a direct torque control scheme, in which case the method may include: observing a torque of the AC machine; and, controlling the AC machine based on a comparison between the observed torque and a reference torque.

The method may include controlling the AC machine according to a direct torque and flux control ("DTFC") scheme, in which case the method may include:,observing a torque of the AC machine; observing a flux linkage of the stator of the AC machine; controlling the AC machine based on a comparison between the observed torque and a reference torque; and controlling the AC machine based on a comparison between the observed flux linkage and a reference flux linkage.

Observing the torque may be based on one or more measurements from an apparatus including the AC machine and/or based on one or more parameters (e.g. reference values) used to control the AC machine. Similarly, observing the flux linkage of the stator may be based on one or more measurements from an apparatus including the AC machine and/or based on one or more parameters (e.g. reference values) used to control the AC machine.

Direct torque control and direct torque and flux control schemes are very well known, as are methods for calculating appropriate values for the reference torque and the reference flux linkage to appropriately control an AC machine. Such methods need not be described here in further detail, although some examples are described below for completeness.

A direct torque control or direct torque and flux control scheme is preferred, especially if the AC machine is a permanent magnet synchronous machine (see below), since direct torque and direct torque and flux control schemes are generally less computationally intensive compared e.g. with a field operated control scheme (see below). As a trade-off, direct torque control and direct torque and flux control schemes generally require estimation of the flux linkage of the stator, but this can be advantageous, since it means that the AC machine does not have to include (potentially expensive) sensors for measuring this quantity.

Although a direct torque and flux control scheme is preferred, a skilled person will appreciate that there are many other available control schemes for controlling AC machines, and that the control scheme that is chosen for a particular AC machine will depend on many factors, such as the machine type, controller complexity, operating environment, tolerance and variations of machine parameters, available measurement signals.

Accordingly, the method could equally be a method according to another control scheme, such as a direct torque control scheme (i.e. without flux control) or a field oriented control ("FOC") scheme.

Herein, controlling/operating an AC machine according to an overmodulation technique may be understood as controlling/operating the AC machine so that the magnitude of the voltage supplied to/produced by the AC machine exceeds $V_{dc}/\sqrt{3}$ at least some of the time, where $V_{dc}$ is a DC link voltage associated with a power converter (i.e. the inverter/rectifier) used with the AC machine.

Operating an AC machine so that the magnitude of the voltage supplied to/produced by the AC machine does not exceed $V_{dc}/\sqrt{3}$ may be referred to as operating the AC machine in the "linear region". Operating an AC machine in the linear region may not effectively utilise the DC link voltage associated with the power converter (i.e. the inverter/rectifier) used with the AC machine.

Overmodulation techniques for use in controlling AC machines are well known in the art and therefore do not need to be explained in detail here. Nonetheless, some example overmodulation techniques are explained in detail below with reference to Fig. 2, Fig. 4 and Fig. 9.

In some simple embodiments, controlling/operating an AC machine according to an overmodulation technique may involve, for example, setting a maximum voltage (according to which the AC machine is controlled) that is greater than $V_{dc}/\sqrt{3}$. For example, the maximum voltage may be set as $2V_{dc}/\pi$ (which is greater than $V_{dc}/\sqrt{3}$), as shown below with reference to Fig. 2.

In the context of a sine wave pulse width modulation control technique, controlling/operating an AC machine according to an overmodulation technique may involve, for example, using a reference sine wave having a larger magnitude than a carrier waveform.

In the context of a space vector modulation control technique, controlling/operating an AC machine according to an overmodulation technique may involve, for example, using a reference voltage vector whose magnitude is larger than the maximum circle that can be included inside the voltage-limit shown in Fig 2(a).

Controlling/operating an AC machine according to an overmodulation technique may additionally/alternatively involve, for example, more general term modulation region enter into non-linear modulation range.

Preferably, the AC machine is controlled according to an overmodulation technique that implements (directly or indirectly) a non-constant maximum voltage, e.g. a six step maximum voltage, since such this allows for improved voltage utilization, e.g. as discussed below with reference to Fig. 4 and Fig. 9.

Preferably, the AC machine is controlled according to an overmodulation technique in which the sum of $\alpha$ and $\beta$ switching times ($T_\alpha + T_\beta$) is driven towards a switching period ($T_S$) of a modulator used to produce switching signals that are supplied to the AC machine via an inverter since, as described in more detail below, this overmodulation technique helps to optimise voltage utilization.

In this context, the $\alpha$ switching time ($T_\alpha$) may be understood as the period of the voltage vector $V_\alpha$, where the voltage vector $V_\alpha$ is a reference voltage in the $\alpha$-$\beta$ frame used to control the AC machine. Similarly, the $\beta$ switching time ($T_\beta$) may be understood as the period of the voltage vector ($V_\beta$), where the voltage vector $V_\beta$ is a reference voltage in the $\alpha$-$\beta$ frame used to control the AC machine.

For a space vector modulation control technique, a zero switching time ($T_0$) may be understood as the period at which the voltage vector zero vector ($V_0$) is applied to generate a reference vector ($V_{ref}$) during the switching time ($T_S$) which complies with the $V_\alpha * T_\alpha + V_\beta * T_\beta + V_0 * T_0 = V_{ref} * T_S$, where maximum over modulation resulted when $T_0 = 0$ during most of the switching periods.

The sum of the $\alpha$ and $\beta$ switching times ($T_\alpha + T_\beta$) may be is driven towards the switching period ($T_S$) of the modulator by: producing a flux linkage reference modifier ($\Delta\lambda^*_{ref}$) based on a comparison of the sum of the $\alpha$ and $\beta$ switching times ($T_\alpha + T_\beta$) and the switching period ($T_S$) of the modulator; and using the flux linkage reference modifier ($\Delta\lambda^*_{ref}$) to modify a flux reference ($\lambda^*_{ref}$) used to control the AC machine. This may be particularly appropriate if the AC machine is controlled according to a direct torque and flux control scheme (see above).

The method maybe performed whilst operating the AC machine in a field weakening region.

Herein, an AC machine operating in a "field weakening region" can be understood as an AC machine operating above its rated speed.

Herein, the terms operating an AC machine "in a field weakening region" or "according to a field weakening technique" may be used interchangeably. A controller configured to operate an AC machine in a field weakening region may be referred to as implementing a field weakening technique.

However, whilst the method may be performed whilst operating the AC machine in a field weakening region, this is not essential, since the method can be used without applying a field weakening technique. For example, the method could be performed in the linear region, which would increase the maximum speed at which the AC machine can operate without field weakening necessarily being applied.

The method may be performed whilst operating the AC machine in a deep field weakening region.

Example operating conditions indicating that the AC machine is operating in a deep field weakening region are discussed in more detail below, but it is to be noted that such conditions can be interdependent on one another and may vary from AC machine to AC machine and from application to application.

An example operating condition that could be used as indicating that the AC machine is operating in a deep field weakening region is an operating condition in which a characteristic current $I_{max}$ of the AC machine satisfies $I_{max} > \lambda_f/L_d$, where $\lambda_f$ is the flux linkage of the permanent magnet and $L_d$ is the d-axis inductance.

Another example operating condition that could be used as indicating that the AC machine is operating in a deep field weakening region is an operating condition in which the AC machine is operated along a maximum torque per volt curve (see e.g. Fig. 2).

Another example operating condition that could be used as indicating that the AC machine is operating in a deep field weakening region is an operating condition in which the observed stability parameter (discussed below) falls within a predetermined range (e.g. $\hat{K} \leq K_{ref}$), but this is not, in general, a necessary and sufficient condition to conclusively determine operation in the deep field weakening region.

The method may include:observing a stability parameter that is indicative of the stability of the AC machine and dependent on a current state of the AC machine; and controlling the AC machine based on the observed stability parameter so as to promote stable operation of the AC machine.

As discussed in an earlier application by the present applicant, GB1301259.6 (a modified copy of which is annexed hereto), controlling the AC machine based on the observed stability parameter can help to stabilise operation of the AC machine, particularly when the AC machine is operating in a deep field weakening region. A regulator that implements such a technique, by observing a stability parameter $K$ (referred to herein as a "$K$ regulator") is discussed in detail in GB1301259.6.

The present inventors observed that the previously proposed $K$ regulator would not work well with overmodulation techniques when used in combination with conventional antiwindup strategies.

However, advantageously, the inventors have found that controlling the operation of an AC machine based on the filtered reference speed (as described above) is compatible with controlling the AC machine based on the observed stability parameter as described in earlier application GB1301259.6 (a modified copy of which is annexed hereto), thereby allowing stable operation of an AC machine in a deep field weakening region according to an overmodulation technique, even if the overmodulation technique sets a non-constant maximum voltage (e.g. as is the case for the overmodulation techniques discussed below with reference to Fig. 4 and Fig. 9).

As far as is known to the inventors, stable operation of an AC machine in a deep field weakening region according to an overmodulation technique, even if the overmodulation technique sets a non-constant maximum voltage, has not previously been achieved.

The method according to the first aspect of the invention may include any of the optional/preferred features of the method(s) described in in earlier application GB1301259.6 (extracts of which are annexed hereto), except where such a combination is clearly impermissible or expressly avoided.

For example, the stability parameter may be defined as $K$ or a parameter which is derived from K, where:

$$K = \frac{3P}{4L_d L_q}[\,2\lambda_f L_q\,cos\delta - 2|\lambda_s|\,(L_q - L_d\,)cos 2\delta\,]$$

The method may include operating the AC machine by: producing one or more reference voltages, e.g. in a 2D reference frame; producing an AC voltage based on the one or more reference voltages (e.g. configured to achieve a desired AC current and/or a desired speed and/or a desired torque at the AC machine); and supplying the AC voltage to the AC machine.

The AC voltage that is supplied to the AC machine may be a multi-phase AC voltage, and is preferably a three-phase AC voltage.

Producing an AC voltage based on the one or more reference voltages may include, for example: producing switching signals for controlling one or more switches of an inverter based on the one or more reference voltages; and producing an AC voltage that is supplied to the AC machine based on the one or more switching signals.

The switching signals, which may e.g. be square wave signals, may be produced based on the one or more reference voltages using various techniques which are known in the art. The switching signals may be produced using a modulator, e.g. a pulse width modulator ("PWM") or a space vector modulator ("SVM"), for example. The modulator may be supplied with a dc link voltage (sometimes referred to as a dc bus voltage) which it may use to produce the switching signals.

An inverter is preferably used to produce the AC voltage that is supplied to the AC machine based on the one or more switching signals.

The method may include controlling the AC machine to operate as a motor, as a generator or, at separate times, as both a motor and a generator.

Thus, the method may include controlling the AC machine in a motoring mode, e.g. in which power is transferred to the AC machine from a power system external to the AC machine, e.g. so as to operate the AC machine as a motor; and/or in a generation mode, e.g. in which power is transferred from the AC machine to a power system external to the AC machine, e.g. so as to operate the AC machine as a generator.

The rotor of the AC machine is preferably situated within the stator but could also be an inner stator and outer rotor arrangement, to which the described control topology may also be applicable, for example.

The AC machine may be a permanent magnet machine in which one or more permanent magnets are included in the rotor.

The permanent magnet machine may be a permanent magnet synchronous machine (PMSM), which may be defined as a permanent magnet machine in which the rotation rate of the rotor is (in use) synchronised with the frequency of AC voltage supplied to the rotor.

As is known in the art, permanent magnet synchronous machines can be classified according to the location of the one or more permanent magnets included in the rotor. For example, a permanent magnet synchronous machine in which one or more permanent magnets are mounted on an outer or inner surface of the rotor may be classified as a "surface mounted" permanent magnet machine (SMPMSM). For example, a permanent magnet machine in which one or more permanent magnets are buried within the rotor may be classified as an "interior" permanent magnet machine (IPMSM). Generally, IPMSMs may be preferred, as IPMSMs are thought to have a higher capability for field weakening than other PMSMs.

Nonetheless, the method may be applied to a wide variety of AC machines, i.e. such that the AC machine could be any one of an induction machine, a synchronous machine, a synchronous reluctance machine, a switch reluctance machine, a brushless synchronous machine. The AC machine could also be a hybrid machine which may comprise two different excitation sources (e.g. PM excitation and a field winding excitation).

The AC machine may, for example, be used in an electrical starter generator.

The method may include controlling the AC machine according to a DTFC control scheme in a closed loop controller.

The method may include determining a reference speed for controlling the operation of the AC machine in an inner torque controller loop.

In a second aspect, the invention may provide an apparatus suitable for performing a method according to the first aspect of the invention.

A second aspect of the invention may therefore provide: a controller for controlling an AC machine that includes a stator and a rotor, wherein the controller is configured to, whilst operating the AC machine in a field weakening region according to an overmodulation technique: determine a reference speed for controlling the operation of the AC machine; filter the reference speed such that if the reference speed exceeds a speed limit of the AC machine, the reference speed is reduced towards that speed limit; and control the operation of the AC machine based on the filtered reference speed.

The controller may be configured to implement, or have means for implementing, any method step described in connection with any above aspect of the invention.

For the avoidance of any doubt, each component of the controller may be implemented in hardware or software.

A third aspect of the invention may provide: a method of controlling an AC machine that includes a stator and a rotor, wherein the method includes operating the AC machine according to an overmodulation technique in which the sum of $\alpha$ and $\beta$ switching times is driven towards a switching period of a modulator used to produce switching signals that are supplied to the AC machine via an inverter.

The method according to the third aspect of the invention may include any of the optional/preferred features of the method(s) described in connection with any above aspect of this invention, except where such a combination is clearly impermissible or expressly avoided.

The invention also includes any combination of the aspects and preferred features described except where such a combination is clearly impermissible or expressly avoided.

Brief Description of the Drawings

Embodiments of the invention will now be described by way of example with reference to the accompanying drawings in which:

Fig. 1 shows (a) voltage-limit hexagon and voltage magnitude and (b) a field weakening controller (linear modulation) implementing a field weakening technique.

Fig. 2 shows (a) voltage-limit hexagon and voltage magnitude and (b) a field weakening controller implementing a field weakening technique and a simple overmodulation technique.

Fig. 3 shows a block diagram of a torque regulator implementing a simple anti-windup technique.

Fig. 4 shows a field weakening controller implementing an optimised overmodulation technique employed in an FOC scheme.

Fig. 5 shows a reference shift phenomenon for the torque regulator implementing a simple anti-windup technique of Fig. 3.

Fig. 6 shows the torque response for the torque regulator of Fig. 3 modified to not implement the anti-windup technique (note the high over shoot in torque response at 500rpm).

Fig. 7 shows (a) the torque response and (b) the K response for the torque regulator of Fig. 3 modified to not implement the anti-windup technique, wherein the AC machine is operated in a deep field weakening region (DFW mode). In Fig. 7(a), the solid line is the actual torque and the dashed line is the reference torque.

Fig. 8 is a block diagram showing a preferred controller implementing a direct torque and flux control scheme with a field weakening strategy.

Fig. 9 is a block diagram showing a field weakening controller implementing a preferred overmodulation technique, as used in the controller of Fig. 8.

Fig. 10 shows the toque speed characteristics of the drive system implemented by the simple field weakening method implemented by the controller of Fig. 1 vs the field weakening method implemented by the controller of Fig. 8.

Fig. 11 shows the torque and flux trajectories of a direct torque and flux controlled (DTFC) interior permanent-magnet synchronous machine (IPMSM) drive.

Fig. 12 shows a block diagram of a modified torque regulator implementing a preferred anti-windup technique, as used in the controller of Fig. 8.

Fig. 13 shows the torque dynamics of the modified torque regulator of Fig. 12.

Fig. 14 shows a torque stabilization controller ("K regulator") implementing a preferred torque stabilization technique, as used in the controller of Fig. 8.

Fig. 15 to Fig. 32 are taken from an earlier application GB1301259.6.

Fig. 33 shows a controller from GB1301259.6, which has been modified in accordance with the teaching set out herein.

Fig. 34 shows a flow chart from GB1301259.6, which has been modified in accordance with the teaching set out herein.

Detailed Description and Further Optional Features of the Invention

In general, the following discussion describes examples of proposals by the inventor(s) that relate to a method of controlling an AC machine, preferably a Permanent Magnet Synchronous Machine, whilst operating the machine across a full speed range including Deep Field Weakening, preferably where the inverter operating region has been extended to overmodulation region to increase the torque yield at given speed. This invention may be applicable to an electrical starter generator operated at very high speed in a generating mode demanding Deep Field Weakening where the generator generally needs to be controlled to collect the maximum power.

The present invention may be viewed as extending the work described in earlier application GB1301259.6 (extracts of which are annexed hereto) by solving overmodulation and controller anti-windup problems with the controller proposed therein.

In the examples discussed below, the proposed control method is applied to a Direct Torque and Flux Control ("DTFC") scheme. DTFC schemes are thought to have inherent merits over Field Orienting Control schemes in sensorless operation.

In the examples described, independent closed-loop torque and stator flux regulation is performed in the stator flux (x-y) reference frame via two Proportional-Integral (PI) controllers (see Fig. 8). To derive the optimum performance and to have stable operation, three main problems have been addressed:

- developing an overmodulation technique that allows best utilization of dc link voltage,
- developing an anti-windup technique that prevents controller saturation
- implementing the torque stabilisation technique previously proposed in GB1301259.6 (extracts of which are annexed hereto) to prevent the controller destabilising with respect to the Maximum Torque Per Flux curve in the Deep Field Weakening operation.

In a field weakening technique used under a DTFC scheme, an outer voltage loop comprising of a PI controller may be used to weaken the stator flux above a base speed, as shown in the example of Fig. 1(b). The reference voltage from the torque controller may be compared with a maximum voltage magnitude to obtain the stator flux reference. When the machine is operated in the linear region a maximum voltage ("voltage limit") according to which the AC machine is controlled may be selected as $V_{\max} = V_{dc}/\sqrt{3}$. This would not use the dc link voltage in an optimum way. This is shown as some of the shaded areas in Fig. 1(a) are left un-utilized (the hexagon of Fig. 1(a) represents optimum voltage optimisation).

The utilization of the dc link voltage can be improved by using an overmodulation technique.

A simple overmodulation technique is to increase the maximum voltage $V_{\max}$ from $V_{dc}/\sqrt{3}$ up to an upper limit of $2V_{dc}/\pi$, i.e. such that $V_{dc}/\sqrt{3} < V_{\max} < 2V_{dc}/\pi$. This is shown in Fig. 2(a) (note that $2V_{dc}/\pi$ is greater than $V_{\max} = V_{dc}/\sqrt{3}$).

However, with the simple overmodulation technique of Fig. 2, the shaded portion of Fig. 2(a) cannot be realized due to the limit imposed by the dc link voltage. This will lead to torque controller saturation and performance degradation, and also prevents the motor from operating at the maximum torque at a given speed. Therefore, the field-weakening method with simple overmodulation of Fig. 2 is not optimal.

To prevent controller saturation due to saturation of the integrator caused by using the simple overmodulation method of Fig. 2, an anti-windup strategy can be incorporated in the torque regulator. Usually, the back-calculation anti-windup method as shown in Fig. 3 is used whereby the actual voltage $v_y$ is compared with the output of the PI regulator $v_y^*$. The closed-loop transfer function of the resulted torque loop shown in Fig. 3 may be written as:

$$T = \frac{K_p s + K_i}{\frac{1}{K}s^2 + K_p s + K_i}\left\{T^* - \frac{s + K_a K_i}{K_p s + K_i}\left(v_y^* - v_y\right)\right\}$$

Optimum overmodulation operation can be achieved if the inverter operating vectors are moved along the hexagon of the space vector diagram shown in Fig. 1(a) and Fig. 2(a). This can be employed in FOC as shown in Fig. 4.

In published literature, six-step modulation was proposed for a finite speed Interior Permanent Magnet Synchronous Machine (IPMSM) as shown in Fig. 4, which has characteristic $\lambda_f/L_d > I_{\max}$ where deep field weakening region doesn't exist. Direct application of a similar overmodulation method in PMSM with DFW operation would result sluggish performance without the anti-windup loop, which would also lead to instability.

It is desirable to have an anti-windup method to improve the transient response and stability, however, use of a simple anti-windup method (e.g. as shown in Fig. 3) would fail as the maximum voltage is not a constant value and it follows six steps when the reference vector moves along the hexagon with zero null time. Hence, the field weakening with six step overmodulation technique of Fig. 4 cannot be used along with the simple anti-windup technique shown in Fig. 3. Even though the overmodulation method of Fig. 4 can be used for a limited speed PMSM without an anti-windup method, it cannot be used for an IPMS motor with DFW operation and a respecting MTPF curve.

In comparison to FOC schemes, DTFC schemes have some inherent advantages in sensorless operation. For example, during flux-weakening ("flux-weakening" = "field weakening") operation under an FOC scheme, operating dq-axes currents are established by solving the torque and voltage limit equations simultaneously. The result is a quadratic equation which is difficult to solve in real-time. Also, as the operating current for any given torque and flux command is also parameter dependant, the dq-axes currents are measured offline and stored in memory-intensive two-dimensional look-up tables.

Since the torque and stator flux are ultimately the control variables in the drive, a DTFC scheme may be a viable alternative to FOC schemes. As a trade-off, the stator flux now has to be estimated in a DTFC scheme. However, in a speed-sensorless drive, which is highly desirable from the standpoint of cost and reliability, the stator flux has to be estimated anyway. Furthermore, as the DTFC requires no rotor coordinate transformation, it is a more suitable candidate for sensorless field-weakening operation.

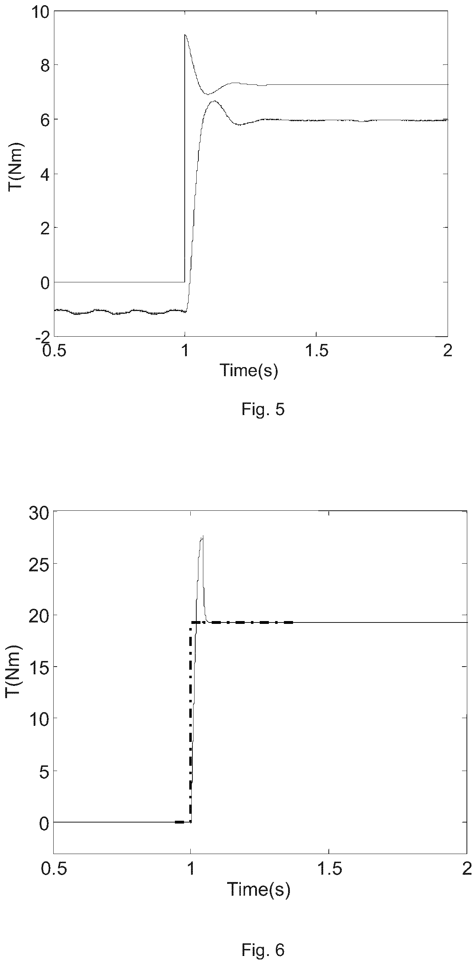

An overmodulation strategy can be used to increase the voltage limit and enhance the torque yield at given speed. However, overmodulation methods shown in Fig. 1 and Fig. 2 are not optimal since, as discussed above, some of the areas are not utilized. Furthermore, in the field-weakening region, the actual voltage $v_y$ may differ from the reference voltage $v_y^*$ due to the limited dc link voltage. Therefore, in steady-state, the reference torque $T^*$ is shifted when compared to that without anti-windup ($K_a$ = 0). Since the actual torque $T$ no longer tracks the reference torque $T^*$, the performance of the drive deteriorates significantly. This phenomenon is clearly illustrated by the simulation results shown in Fig. 5 where actual torque (solid line) does not track its reference value (dotted line).

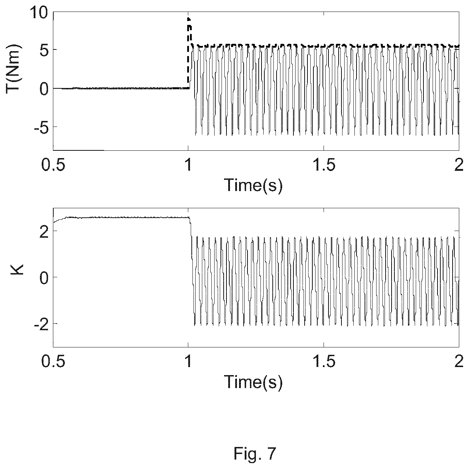

In the simulation of Fig. 5, the machine was running steadily at 2500 rpm, when a maximum torque step command was initiated at $t$ = 1$s$. The flux loop does not suffer this effect because in steady-state, the x-axis voltage component equals the stator resistive drop which is negligible compared to the maximum available voltage. Also in the DFW mode the reference shift phenomena would lead to non operation at Maximum Torque Per Flux (MTPF) curve. It is worth noting that without the anti-windup algorithm of Fig. 3, the problem vanishes but the torque transient response becomes poor with a large overshoot (see Fig. 6) which may in turn, cause instability in the DFW mode (see Fig. 7), where motor operation may jump from motoring mode to generating mode and vice-versa. Moreover, the previously proposed K regulator described in earlier application GB1301259.6 (extracts of which are annexed hereto) is not fast enough to cope with the fast transient conditions and resultant instability.

Fig. 8 is a block diagram showing a preferred controller for controlling an AC machine that includes a stator and a rotor, wherein the controller is configured to, whilst operating the AC machine in a field weakening region according to an overmodulation technique: determining a reference speed $\left(\omega_s^*\right)$ for controlling the operation of the AC machine; filtering the reference speed $\left(\omega_s^*\right)$ such that if the reference speed exceeds a speed limit of the AC machine ($\omega_{s(max)}$), the reference speed is reduced towards that speed limit; and controlling the operation of the AC machine based on the filtered reference speed ($\omega_{s(\lim)}^*$).

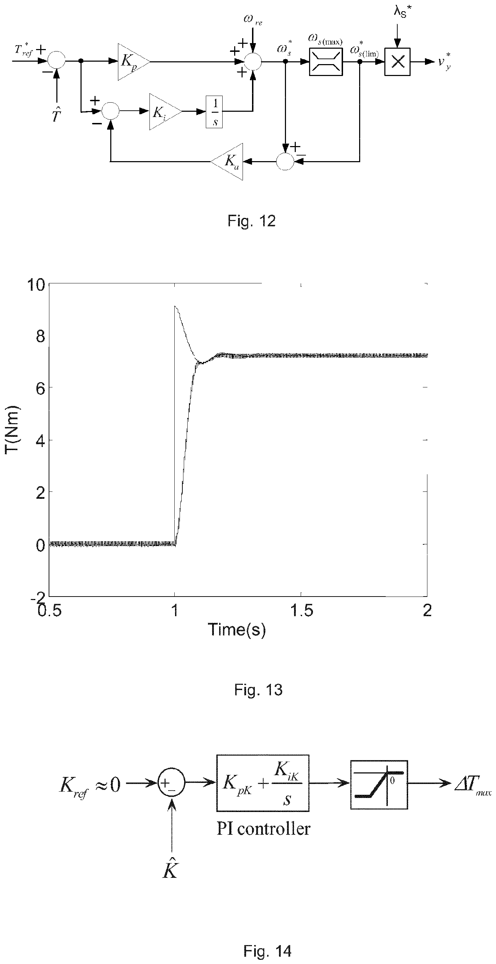

The controller preferably includes a field weakening controller implementing a preferred overmodulation technique (as discussed below with reference to Fig. 9), a modified torque regulator implementing a preferred anti-windup technique (as discussed below with reference to Fig. 12), and a previously proposed K regulator to provide torque stabilization (as discussed below with reference to Fig. 14).

For field weakening operation, instead of comparing the voltage (as in Fig. 1 and Fig. 2), the switching times of the active voltage vectors (in this case the $\alpha\beta$ voltage vectors) may be used.

The inventors have observed that if the sum of the switching times of the $\alpha\beta$-axes voltage components equal the total switching period $T_S$, the stator voltage vector moves along the optimum hexagon trajectory and six-step (overmodulation) may be obtained.

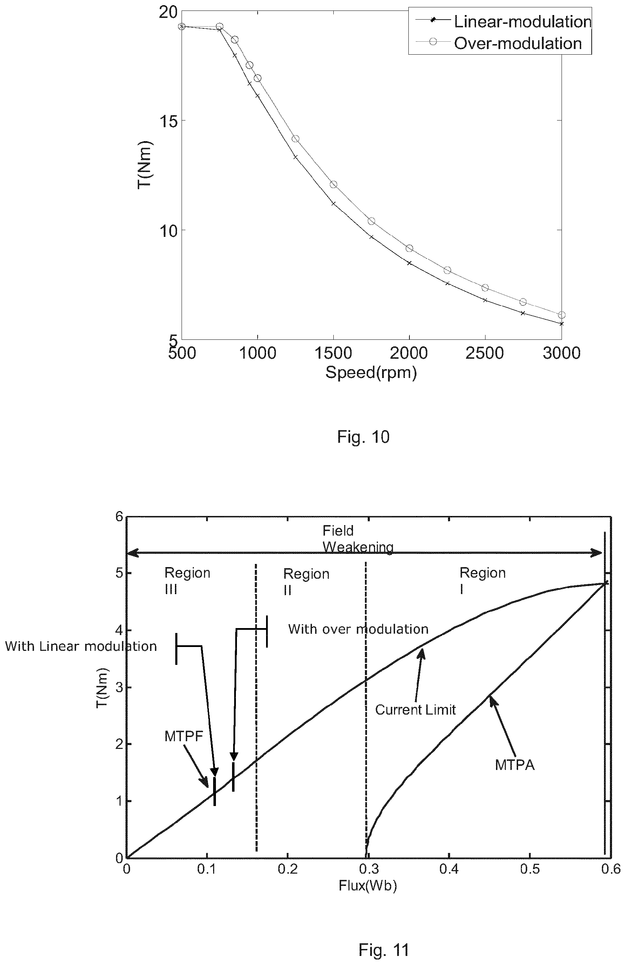

In a preferred embodiment, the total switching time may be compared with the switching period and the error fed through a Proportional-Integral controller to obtain the stator flux reference as shown in Fig. 9. In this overmodulation scheme, a greater torque capability of the machine can be exploited, as demonstrated by the simulation data shown in Fig. 10.

Specifically, the proposed overmodulation technique is capable of generating 10% more torque than that of the conventional linear modulation method of Fig. 1 $(v_{max} = V_{dc}/\sqrt{3})$, as demonstrated by in Fig. 10.

Moreover, using the overmodulation technique of Fig. 9, field weakening required for achieving the same torque would be much lower and it would operate at much higher point in MTPF curve compared to the linear overmodulation of Fig. 1, as demonstrated by Fig. 11.

As mentioned above, the anti-windup technique shown in Fig. 3 cannot be used with the six-step overmodulation technique of Fig. 4, since the maximum voltage is not a constant. This problem can be resolved by modifying the torque regulator as shown in Fig. 12. Instead of the y-axis voltage component, the stator flux speed is now the output of the Proportional-Integral regulator with anti-windup. The reference y-axis voltage component is the obtained from

$$v_y^* = \omega_{S(\lim)}^* \lambda_S^*$$

In this way, a reference speed $(\omega_s^*)$ for controlling the operation of the AC machine is determined based on a comparison between the observed torque $\hat{T}$ and the reference torque T*. The reference speed $(\omega_s^*)$ is then filtered such that if the reference speed exceeds a speed limit of the AC machine ($\omega_{s(max)}$), the reference speed is reduced towards that speed limit. The AC machine is then controlled based on the filtered reference speed ( $\omega_{s(\lim)}^*$ ) by producing a reference voltage based on the filtered reference speed ( $v_y^* = \omega_{S(\lim)}^* \lambda_S^*$ ) and controlling the operation of the AC machine based on the reference voltage $(v_y^*)$.

By using the anti-windup configuration of Fig. 12, the closed-loop transfer function of the torque loop is given by:

$$T = \frac{K_p s + K_i}{\frac{1}{K} s^2 + K_p s + K_i} \left\{ T^* - \frac{s + K_a K_i}{K_p s + K_i} \left( \omega_s^* - \omega_{s(\lim)} \right) \right\} \qquad (2)$$

Now, in steady-state, $\omega_s^* = \omega_{s(\lim)}^* = \omega_{re}$ and the transfer function reduces back to:

$$T = \frac{K_p s + K_i}{\frac{1}{K} s^2 + K_p s + K_i} T^* \qquad (1)$$

which is identical to the transfer function without anti-windup. Hence, the reference shift phenomenon is non-existent in the proposed scheme and the actual torque T tracks the reference torque T*. This is evident from the simulation results in Fig. 13 whereby the identical scenario in Fig. 5 is replicated (again, the solid line represents torque and the dotted line represents the torque reference value).

The overmodulation and anti-windup techniques of Fig. 9 and Fig. 12 can be applied in full range of Permanent Magnet Synchronous Machine operation including Deep Field Weakening operation. However, in Deep Field Weakening operation, in order to prevent the stability problem occurring, it is essential to implement controller stabilization.

In earlier application GB1301259.6 (extracts of which are annexed hereto), Maximum Torque Per Flux controlling in Deep Field Weakening mode for a Permanent Magnet Synchronous Machine was addressed using a K regulator implementing a torque stabilization loop. The K regulator worked by observing a stability parameter K and controlling the AC machine based on the observed stability parameter K so as to promote stable operation of the AC machine, where K was given by:

$$\hat{K} = \frac{3P}{4L_d L_q} [ 2\lambda_f L_q \cos\hat{\delta} - 2|\lambda_s| (L_q - L_d) \cos 2\hat{\delta} ]$$

The main reason for instability was found to be parameter variation. A similar phenomenon is observed in Fig.

7, where torque over-shoot excited instability. When the torque over-shot, the variable K became negative and the motor torque fell rapidly and hence K becomes positive again, resuming stable control along the Maximum Torque Per Flux trajectory for a brief moment, then K becomes negative again and the whole process repeated. Needless to say, this kind of drive performance is unacceptable in any practical situation.

Hence with respect to the Maximum Torque Per Flux in Deep Field Weakening operation it is highly preferred to have a torque stabilization controller shown in Fig. 14, where it uses an observer to estimate the parameter K and is controlled using a Proportional-Integral controller to regulate the estimated K value to approximately zero in the Maximum Torque Per Flux region.

Customer requirements for civil and defence aircrafts are growing and driving the need for More Electric Aircraft (MEA). Advances in power electronics and electrical machines have permitted the use of an Electric Starter Generator (ESG) coupled to the gas turbine engine. Such a generator requires high speed operation in the generating mode, where the machine may enter into DFW operation where stability and maximum power generation are key concerns. The present invention facilitates full exploitation of electrical machine capability with maximum power extraction while ensuring the stable operation, and without introducing disturbance to connected mechanical systems. The proposed control method enables full utilization of the motor and inverter operating limits.

The proposed controller (Fig. 8) is applicable in controlling Alternating Current (AC) motor drives where they operate at very high speeds and it supports both motoring and generating modes. The proposed controller can be directly applicable in Electrical Starter Generators and across a range of applications in which motor drives are used in operation at very high speeds such as electric and hybrid electric vehicles, electric and diesel-electric trains and industrial drives.

Although the focus of this invention is given to extend the operating region of a PMSM which may used in an electrical starter generator, the invented control technique and anti-windup method can be can be applied to any application which involves an AC machine driven by a power inverter, regardless of whether a FOC or a DTFC scheme is used. Here it is to be noted that equations that implement the techniques taught herein for FOC would not be the same as the equations set out above, which implement the techniques taught herein for DTFC. It would therefore be necessary to derive separate equations that implement the techniques taught herein for an FOC control method. Such a derivation would be straightforward for a skilled person, based on the teaching provided herein.

Whilst the current controller has been proposed for use with PMSM, it could be effectively used with any type of synchronous machine including the surface mounted synchronous machine and synchronous reluctance machines. It may also be applicable to induction motor drives with simple modification to controller.

The current invention can also exploit at the machine design stage where expanded operating range of the machine and the inverter can be used at selecting component ratings and hence significant cost saving can be achieved.

For the avoidance of any doubt, the overmodulation techniques described above (e.g. with reference to Fig. 2 or Fig. 9) could be usefully applied without implementing a field weakening technique, since the overmodulation techniques described above would still help to provide optimum dc link voltage utilization and to extend the speed that could be obtained, even if a field weakening technique is not implemented. Thus, it should be understood that the anti-windup technique taught herein does not require the implementation of a field weakening technique to help an AC machine function properly to attain a desired speed. The methods and techniques described above may be combined with the teaching in earlier application GB1301259.6 (extracts of which are annexed hereto), except where such a combination is clearly impermissible or expressly avoided.

Examples of where a combination of the teaching of GB1301259.6 might not be directly combinable with the methods and techniques described above may include:

- GB1301259.6 teaches $v_y > v_{dc} / \sqrt{3}$ as an example operating condition that could be used as indicating that an AC machine is operating in a field weakening region, yet with the methods and techniques taught above, $v_y$ is not used and instead the AC machine is controlled according to an overmodulation technique in which the sum of $\alpha$ and $\beta$ switching times ($T_\alpha + T_\beta$) is driven towards a switching period ($T_S$).

- GB1301259.6 teaches that a preliminary reference flux linkage of the stator $\lambda_{ref\text{-}pre}$ is preferably developed from a maximum DC link voltage $v_{dc-\max} = v_{dc} / \sqrt{3}$, but with an overmodulation method this would change, e.g. to $v_{dc\text{-}max} = 2v_{dc}/\pi$.

However, these are minor differences, and none of these differences would prevent a skilled person from combining the teaching of GB1301259.6 with the methods and techniques described above.

For example, in combining the teaching of GB1301259.6 with the methods and techniques described above, a skilled person may, for example:

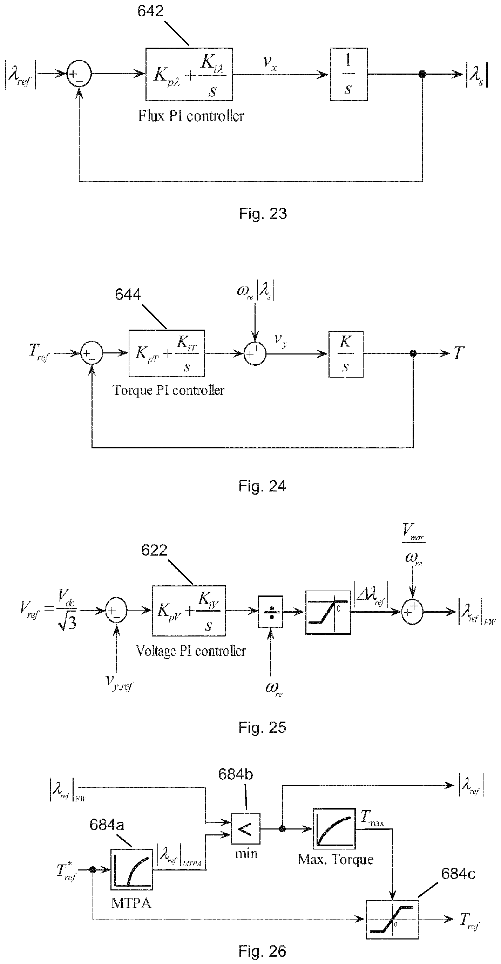

- Use the field weakening controller of Fig. 9 in place of the field weakening controller shown in Fig. 25.

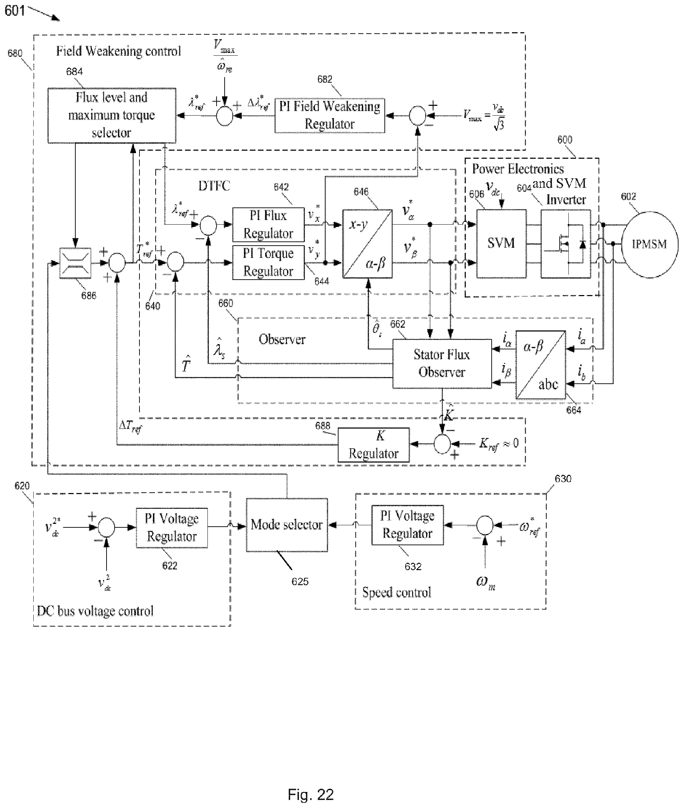

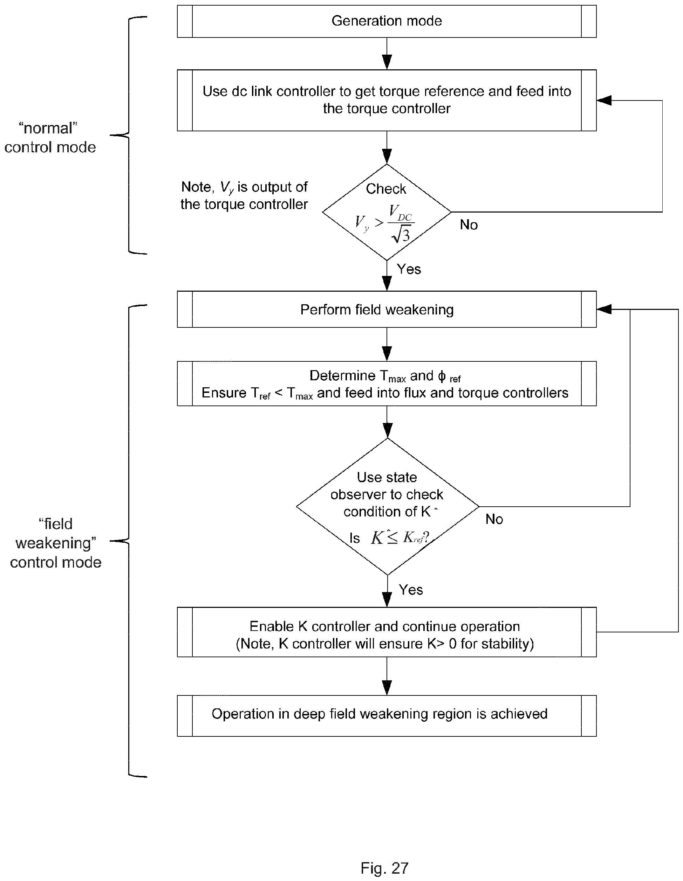

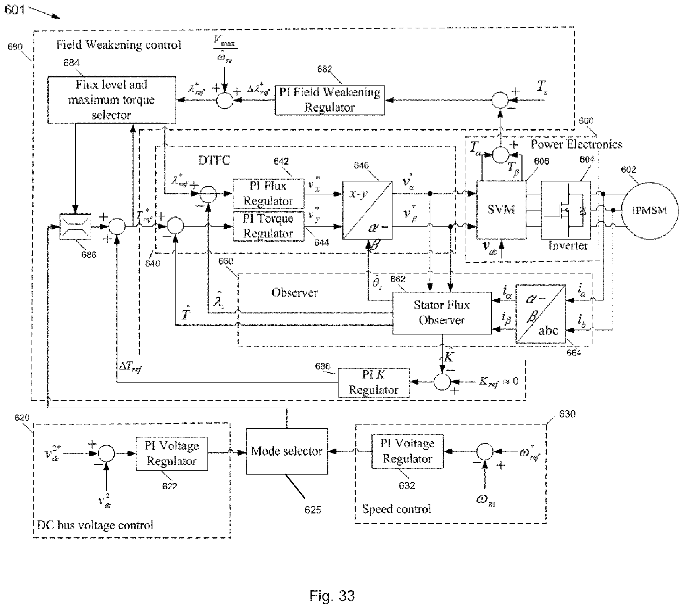

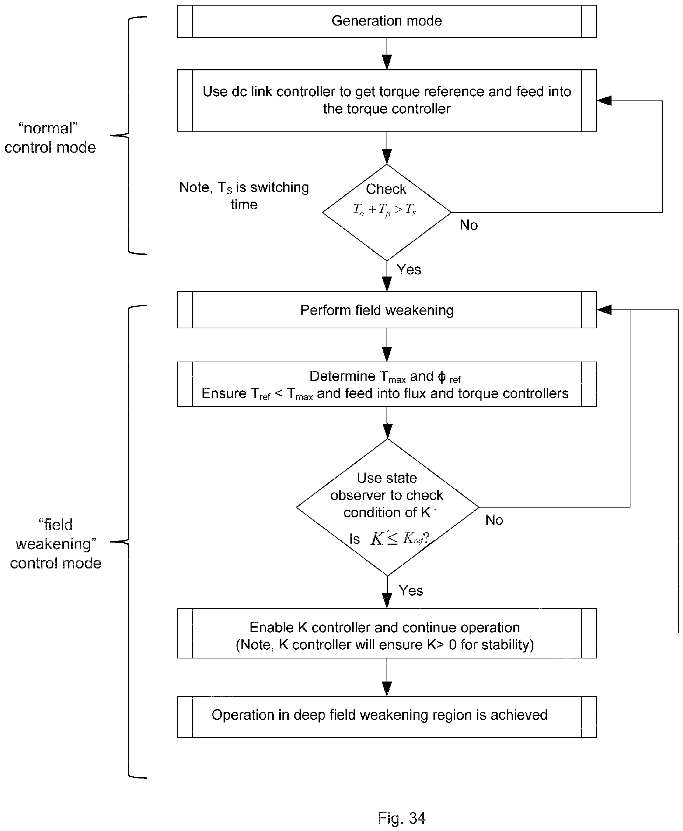

- Modify the controller of Fig. 22 as shown in Fig. 33
- Modify the flow chart of Fig. 27 as shown in Fig. 34

When used in this specification and claims, the terms "comprises" and "comprising", "including" and variations thereof mean that the specified features, steps or integers are included. The terms are not to be interpreted to exclude the possibility of other features, steps or integers being present.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilized for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

All references referred to above are hereby incorporated by reference.

Annex - Extracts from GB1301259.6

These extracts from UK patent application GB1301259.6 are included since the teaching of the present application can be combined with the teaching of GB1301259.6 in the manner described above. Also, these extracts provide useful background for the present invention. Note that the figures of GB1301259.6 have been renumbered to avoid conflict with the other figures in the present application.

This invention relates to a method of controlling an AC machine that includes a stator and a rotor, and a controller for controlling an AC machine that includes a stator and a rotor.

Alternating current ("AC") machines having a stator and a rotor, such as permanent magnet synchronous machines ("PMSMs"), are typically designed with a base speed and torque. The "base speed" may be defined as the speed at which a maximum torque of the AC machine is able to provide a maximum power. The base speed can be contrasted with a "rated speed" of the AC machine, which may define the maximum continuous operating speed. Operating the AC machine beyond the base speed typically utilises so-called "field weakening" (also referred to as "flux weakening") techniques.

Many conventional AC machine control methods and controllers ("control topologies") require precise knowledge of rotor position to facilitate stable and accurate control of the switching of power electronics. Rotor position is typically measured using an encoder or revolver, or alternatively can be estimated by advanced control techniques which are sometimes referred to as "sensorless" control techniques.

In general, AC machines can operate in a "motoring" mode where power is transferred to the AC machine from a power system external to the AC machine or in a "generation" mode where the power is transferred from the AC machine to a power system external to the AC machine.

It is known that AC machines can be controlled to operate at high speed in what can be referred to as a "deep" field weakening ("DFW") region. As explained in more detail below, existing methods for controlling an AC machine to operate in a DFW region typically use field oriented control ("FOC") schemes which are computationally intensive and/or result in suboptimum performance of the AC machine.

The present invention has been devised in light of the above considerations.

The present invention relates to an observation by the inventors that the stability of an AC machine that includes a stator and a rotor can be indicated by a parameter that is dependent on a current state of the AC machine. A parameter that is indicative of the stability of an AC machine and dependent on a current state of the AC machine may be referred to herein as a "stability parameter".

By observing a stability parameter, e.g. at regular intervals, and controlling an AC machine based on the observed stability parameter, stable operation of the AC machine can be promoted, e.g. by inhibiting or substantially preventing transition between motoring and generation modes, which could give arise to torque ripple.

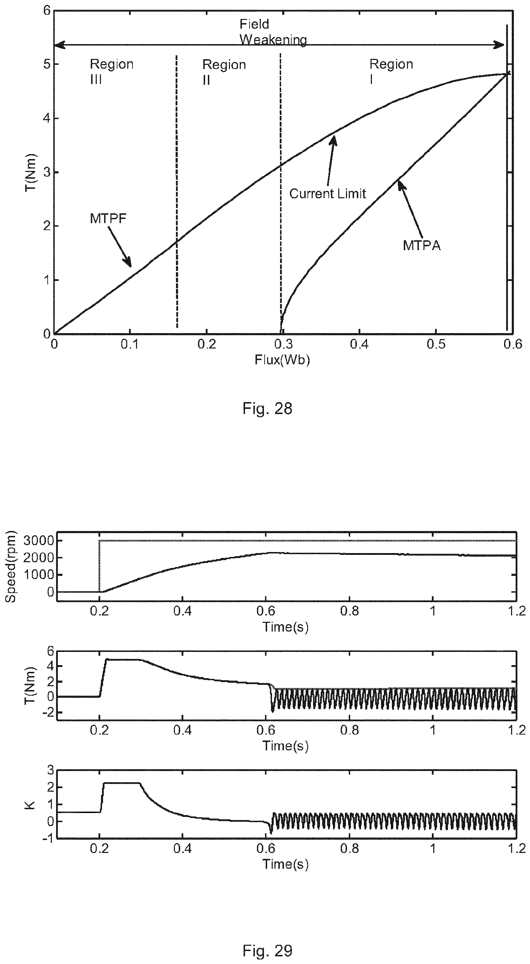

An example of unstable operation of an AC machine is torque ripple, in which the torque of the AC machine oscillates in an unwanted manner. An example of torque ripple is illustrated in Fig. 29. Controlling the AC machine so as to promote stable operation of the AC machine may therefore involve promoting stable operation of the AC machine by inhibiting, preferably substantially preventing, torque ripple.

A "current state" of the AC machine may be viewed as the condition of the AC machine at a given time. This could be referred to as the "instantaneous" state of the AC machine, for example.

Herein, when a given parameter is described as being "observed", it is intended to cover the possibilities of a value of the parameter that has been estimated as well as a value of the parameter that has been determined in some other way (e.g. by directly/indirectly measuring the parameter). For example, a given parameter may be "observed" based on one or more measurements from an apparatus including the AC machine and/or based on one or more parameters (e.g. reference values) used to control the AC machine.

A specific example of a stability parameter that is indicative of the stability of an AC machine and dependent on a current state of the AC machine is the parameter $K$ defined below. In an example controller described below, stable operation of an AC machine is promoted by controlling the AC machine based on an observed value of $K$.

However, from the discussions below, a skilled person will appreciate that stability parameters other than $K$, that are also indicative of the stability of an AC machine and dependent on a current state of the AC machine, could also be defined, such that it is not appropriate to see the "stability parameter" as being restricted to $K$.

For example, it is to be observed that the parameter $K$ defined below is particularly dependent on the flux linkage of the stator $\lambda_S$. Accordingly, the stability parameter may be defined as being dependent on the flux linkage of the stator.

As another example, it is to be observed that the parameter $K$ defined below is particularly dependent on a phase angle $\delta$ between an axis of a 2D reference frame that is defined to be fixed with respect to the rotor (e.g. the d-q frame defined below) and an axis of a 2D reference frame that is defined to be fixed with respect to (a 2D vector representative of) the flux linkage of the stator $\lambda_\mathbf{s}$ (e.g. the $x$ - $y$ frame defined below) for a given state of operation of the AC machine (note that these axes might not be fixed with respect to the rotor and flux linkage in all states of operation, e.g. during flux weakening). Accordingly, the stability parameter may be defined as being dependent on a phase angle between an axis of a 2D reference frame that is defined to be fixed with respect to the rotor and an axis of a 2D reference frame that is defined to be fixed with respect to the flux linkage of the stator for a given state of operation of the AC machine.

From the discussion in the previous paragraph, it can be seen that the phase angle $\delta$ is representative of a phase angle of the flux linkage of the stator $\lambda_\mathbf{s}$ with respect to the rotor of the AC machine. Accordingly, the stability parameter may be defined as being dependent on a parameter representative of a phase angle of the flux linkage of the stator with respect to the rotor of the AC machine.

As an aside, the position of the rotor of the AC machine will in general be derivable from the phase angle $\delta$ referred to above.

The phase angle $\delta$ can be seen as being representative of a current state of the AC machine. Accordingly, the stability parameter may be defined as being dependent on the flux linkage of the stator and an additional parameter representative of a current state of the AC machine.

The additional parameter representative of a current state of the AC machine may be defined as being representative of a phase angle between an axis of a 2D reference frame that is defined to be fixed with respect to the rotor and an axis of a 2D reference frame that is defined to be fixed with respect to the flux linkage of the stator for a given state of operation of the AC machine and/or as being representative of a phase angle of the flux linkage of the stator with respect to the rotor of the AC machine.

It is thought that the dependencies referred to above contribute to the parameter $K$ being indicative of the stability of an AC machine.

It is also to be observed that the parameter $K$ defined below was derived by relating torque and flux and, more specifically, was derived by relating torque, flux linkage of the stator and a voltage to be supplied to the stator of the AC motor (in the derivation of $K$, the voltage $v_x$ was related to torque and flux linkage of the stator). It is thought that this factor contributes to the parameter $K$ being indicative of the stability of an AC machine. Accordingly, the stability parameter may be defined as being derived by relating torque and flux or as being derived by relating torque, flux and a voltage to be supplied to the stator of the AC motor.

The stability parameter may be defined as $K$ or a parameter which is derived from $K$, where:

$$K = \frac{3P}{4L_d L_q} [\, 2\lambda_f L_q \cos\delta - 2|\lambda_s| (L_q - L_d) \cos 2\delta \,]$$

$\lambda_S$ is the flux linkage of the stator; $\lambda_f$ is the flux linkage of a permanent magnet of the AC machine; $\delta$ is a phase angle between an axis of a 2D reference frame that is defined to be fixed with respect to the rotor and an axis of a 2D reference frame that is defined to be fixed with respect to the flux linkage of the stator for a given state of operation of the AC machine;

$P$ is number of pole pairs in the AC machine; $L_d$ is d-axis inductance of the AC machine;

$L_q$ is q-axis inductance of the AC machine.

The stability parameter may be observed at regular or irregular intervals.

Controlling the AC machine based on the observed stability parameter may be based on a difference between the observed stability parameter and a reference stability parameter.

Preferably, controlling the AC machine based on the observed stability parameter includes modifying a parameter used to control the AC machine based on the observed stability parameter, more preferably modifying a parameter used to control the AC machine based on a difference between the observed stability parameter and a reference stability parameter.

Preferably, the parameter used to control the AC machine is a reference torque. Therefore, preferably, controlling the AC machine based on the observed stability parameter includes modifying a reference torque used to control the AC machine based on the observed stability parameter, more preferably modifying a reference torque used to control the AC machine based on a difference between the observed stability parameter and a reference stability parameter.

Herein, when a given parameter is described as being a "reference" parameter, it is intended to cover the possibilities of a parameter that is either fixed in value as well as a parameter whose value can be changed so as to control the operation of an AC machine.

The method may include controlling the AC machine based on the observed stability parameter such that the observed stability parameter is urged to lie within a predetermined range so as to promote stable operation of the AC machine.

Controlling the AC machine may be such that the observed stability parameter lies within the predetermined range for most of the time whilst the AC machine is controlled based on the observed stability parameter. More preferably, controlling the AC machine is such that the observed stability parameter lies within the predetermined range for substantially all of the time whilst the AC machine is controlled based on the observed stability parameter (which time may, for example, be whilst the AC machine is controlled in a field weakening control mode, see below).

It is to be recognised that the stability parameter might fall out of the predetermined range very briefly, even in a method that is intended to keep the stability parameter within the predetermined range for all of the time whilst the AC machine is controlled based on the observed stability parameter.

Nonetheless, it may be desirable in some embodiments for controlling the AC machine to be such that the observed stability parameter lies within the predetermined range for all of the time (i.e. the entire time) whilst the AC machine is controlled based on the observed stability parameter.

If the stability parameter is defined as $K$, then the predetermined range may be defined as $K \geq 0$, since this range has been observed to promote stable operation of an AC machine (see below). However, other stability parameters could equally be formulated based on similar considerations (see above).

Controlling the AC machine may include: producing one or more reference voltages, e.g. in a 2D reference frame; producing an AC voltage based on the one or more reference voltages (e.g. configured to achieve a desired AC current and/or a desired speed and/or a desired torque at the AC machine); and supplying the AC voltage to the AC machine.

The AC voltage that is supplied to the AC machine may be a multi-phase AC voltage, and is preferably a three-phase AC voltage.

Producing an AC voltage based on the one or more reference voltages may include, for example: producing switching signals for controlling one or more switches of an inverter based on the one or more reference voltages; and producing an AC voltage that is supplied to the AC machine based on the one or more switching signals.

The switching signals, which may e.g. be square wave signals, may be produced based on the one or more reference voltages using various techniques which are known in the art. The switching signals may be produced using a modulator, e.g. a pulse width modulator ("PWM") or a space vector modulator ("SVM"), for example. The modulator may be supplied with a DC "link" voltage measurement which it may use to produce the switching signals.

The method may include controlling the AC machine according to a direct torque control scheme, in which case the method may include: observing a torque of the AC machine; and controlling the AC machine based on a comparison between the observed torque and a reference torque.

The method may include controlling the AC machine according to a direct torque and flux control scheme, in which case the method may include: observing a torque of the AC machine; observing a flux linkage of the stator of the AC machine; controlling the AC machine based on a comparison between the observed torque and a reference torque; and controlling the AC machine based on a comparison between the observed flux linkage and a reference flux linkage.

As would be appreciated by a skilled person, torque and/or flux linkage of the stator could be observed at regular or irregular intervals.

In either of the above control schemes, observing the torque may be based on one or more measurements from an apparatus including the AC machine and/or based on one or more parameters (e.g. reference values) used to control the AC machine. Similarly, observing the flux linkage of the stator may be based on one or more measurements from an apparatus including the AC machine and/or based on one or more parameters (e.g. reference values) used to control the AC machine.

Direct torque and direct torque and flux control schemes are very well known, as are methods for calculating appropriate values for the reference torque and the reference flux linkage to appropriately control an AC machine. Such methods need not be described here in further detail, although some examples are described below for completeness.

If the method of is a method of operating an AC machine according to a direct torque or direct torque and flux control scheme, controlling the AC machine based on the observed stability parameter so as to promote stable operation of the AC machine may include modifying the reference torque (and/or the reference flux linkage, for a direct torque and flux control scheme) based on the observed stability parameter, more preferably based on a difference between the observed stability parameter and a reference stability parameter.

A direct torque or direct torque and flux control scheme is preferred, especially if the AC machine is a permanent magnet synchronous machine (see below), since direct torque and direct torque and flux control schemes are generally less computationally intensive compared e.g. with a field operated control scheme (see below). As a trade-off, direct torque and direct torque and flux control schemes generally require estimation of the flux linkage of the stator, but this can be advantageous, since it means that the AC machine does not have to include (potentially expensive) sensors for measuring this quantity.

Although a direct torque or direct torque and flux control scheme is preferred, a skilled person will appreciate that there are many other available control schemes for controlling AC machines, and that the control scheme that is chosen for a particular AC machine will depend on many factors, such as the machine type, controller complexity, operating environment, tolerance and variations of machine parameters, available measurement signals.

Accordingly, the method could equally be a method according to another control scheme, such as a field oriented control scheme (see below).

The method may include controlling the AC machine in one or more control modes.

The method may include controlling the AC machine based on the observed stability parameter so as to promote stable operation of the AC machine in a field weakening control mode. Note that the method may include controlling the AC machine in other control modes (e.g. the normal control mode discussed below) in which the AC machine is not controlled based on the observed stability parameter.

Preferably, the method includes controlling the AC machine in a field weakening control mode if (preferably only if) one or more predetermined operating conditions indicating that the AC machine is operating in a field weakening region is/are met.

Example operating conditions indicating that the AC machine is operating in a field weakening region are discussed in more detail below, but it is to be noted that such conditions can be interdependent on one another and may vary from AC machine to AC machine and from application to application.

An example operating condition that could be used as indicating that the AC machine is operating in a field weakening region is an operating condition in which the AC machine is operated beyond its base speed.

Another example operating condition that could be used as indicating that the AC machine is operating in a field weakening region is, for the specific example described below with reference to Fig. 27, $v_y > v_{dc} / \sqrt{3}$ . However, it is to be recognised that if the AC machine is operated below the current limit curve, the voltage limit may not be affected but field weakening may still be required (see e.g. the explanation of Fig. 25 below).

Controlling the AC machine in a field weakening control mode may involve controlling the AC machine according to a known field weakening technique whilst additionally controlling the AC machine based on the observed stability parameter (e.g. by modifying a reference torque produced as part of the field weakening technique). There are of course many known field weakening techniques available.

Preferably, the method includes controlling the AC machine in a normal control mode. Controlling the AC machine in a normal control mode may involve controlling the AC machine without applying a field weakening technique, for example.

Preferably, the method includes controlling the AC machine in a normal control mode if (preferably only if) one or more predetermined operating conditions indicating that the AC machine is not operating in a field weakening region is/are met.

Example operating conditions indicating that the AC machine is not operating in a field weakening region are discussed in more detail below, but it is to be noted that such conditions can be interdependent on one another and may vary from AC machine to AC machine and from application to application.

An example operating condition that could be used as indicating that the AC machine is not operating in a field weakening region is an operating condition in which the AC machine is not operated beyond its base speed.

Another example operating condition that could be used as indicating that the AC machine is not operating in a field weakening region is, for the specific example described below with reference to Fig. 27, $v_y \leq v_{dc} / \sqrt{3}$ . However, it is to be recognised that if the AC machine is operated below the current limit curve, the voltage limit may not be affected but field weakening may still be required (see e.g. the explanation of Fig. 25 below).

The method may include controlling the AC machine in more than one field weakening control mode.

For example, the method may include controlling the AC machine in a "primary" field weakening control mode (e.g. if one or more predetermined operating conditions indicating that the AC machine is operating in a primary field weakening region is/are met) and/or in a "deep" field weakening control mode (e.g. if one or more predetermined operating conditions indicating that the AC machine is operating in a deep field weakening region is/are met).

Controlling the AC machine in a deep field weakening control mode may be the same as the primary field weakening control mode, except that in the deep field weakening control mode the AC machine is additionally controlled based on the observed stability parameter (e.g. such that the observed stability parameter is urged to lie within a predetermined range) so as to promote stable operation of the AC machine.

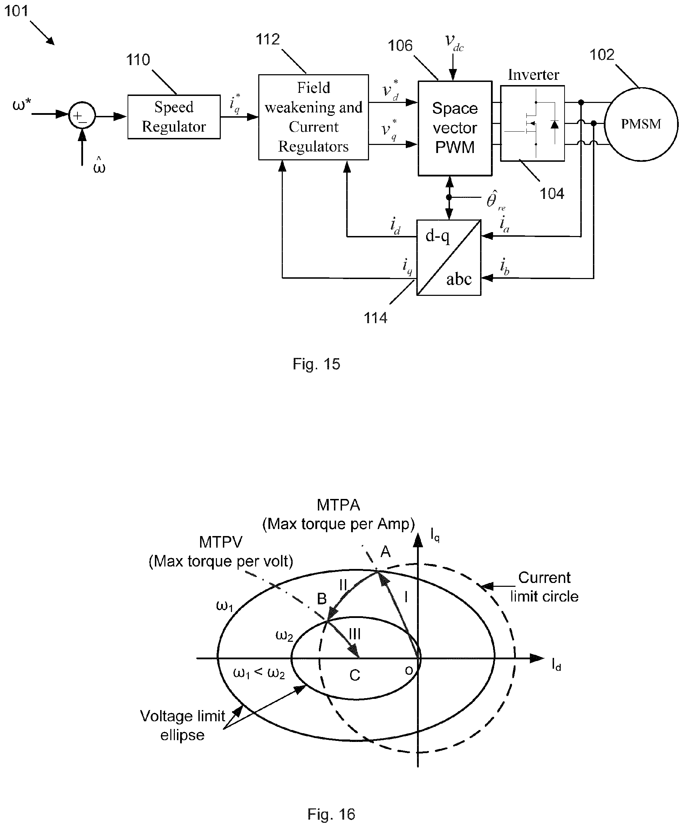

An advantage of having both primary and deep field weakening control modes is that urging the stability parameter to lie within a predetermined range may only be required when operating the AC machine in a "deep" field weakening region, and may be non-optimal in other field weakening regions (such as region II shown in Fig. 16). However, in other embodiments, there may only be one field weakening control mode.

Example operating conditions indicating that the AC machine is operating in a deep field weakening region are discussed in more detail below, but it is to be noted that such conditions can be interdependent on one another and may vary from AC machine to AC machine and from application to application.

An example operating condition that could be used as indicating that the AC machine is operating in a deep field weakening region is an operating condition in which a characteristic current $I_{max}$ of the AC machine satisfies $I_{max} > \lambda_f/L_d$, where $\lambda_f$ is the flux linkage of the permanent magnet and $L_d$ is the d-axis inductance.

Another example operating condition that could be used as indicating that the AC machine is operating in a deep field weakening region is an operating condition in which the AC machine is operated along a maximum torque per volt curve (see e.g. Fig. 16).

The flux and torque domain (see Fig. 28) can also be expressed by mathematical equations which describe the voltage and current limits.

Another example operating condition that could be used as indicating that the AC machine is operating in a deep field weakening region is an operating condition in which the observed stability parameter falls within a predetermined range (e.g. $\hat{K} \le K_{ref}$ for the specific example below described with reference to Fig. 27), but this is not, in general, a necessary and sufficient condition to conclusively determine operation in the deep field weakening region.

An operating condition indicating that the AC machine is operating in a primary field weakening region may be defined as being met if: an operating condition indicating that the AC machine is operating in a field weakening region is met; and an operating condition indicating that the AC machine is operating in a deep field weakening region is not met.

For the avoidance of any doubt, an operating condition indicating that <condition X> is not met, should be considered as being equivalent to an operating condition indicating that <not condition X> is met.

For the avoidance of any doubt, the method may include controlling the AC machine in one or more control modes (such as the primary field weakening and the normal control modes described above) in which the control of the AC machine is not be based on the observed stability parameter. This could be because, for example, the stability parameter could naturally lie within the predetermined range during these one or more control modes and/or because it may be possible to achieve stable operation of the AC machine during these one or more other control modes even if the stability parameter lies outside the predetermined range.

The method may include controlling the AC machine to operate as a motor, as a generator or, at separate times, as both a motor and a generator. In any of these cases, stable operation of the AC machine can potentially be promoted by controlling the AC machine based on stability parameter.

Thus, the method may include controlling the AC machine in a motoring mode, e.g. in which power is transferred to the AC machine from a power system external to the AC machine, e.g. so as to operate the AC machine as a motor; and/or in a generation mode, e.g. in which power is transferred from the AC machine to a power system external to the AC machine, e.g. so as to operate the AC machine as a generator. In either the motoring or generation modes, stable operation of the AC machine can potentially be promoted by controlling the AC machine based on stability parameter.

The rotor of the AC machine is preferably situated within the stator but could also be an inner stator and outer rotor arrangement, to which the described control topology may also be applicable, for example.

The AC machine may be a permanent magnet machine in which one or more permanent magnets are included in the rotor.

The permanent magnet machine may be a permanent magnet synchronous machine ("PMSM"), which may be defined as a permanent magnet machine in which the rotation rate of the rotor is (in use) synchronised with the frequency of AC voltage supplied to the rotor.

As is known in the art, permanent magnet synchronous machines can be classified according to the location of the one or more permanent magnets included in the rotor. For example, a permanent magnet synchronous machine in which one or more permanent magnets are mounted on an outer or inner surface of the rotor may be classified as a "surface mounted" permanent magnet machine ("SMPMSM"). For example, a permanent magnet machine in which one or more permanent magnets are buried within the rotor may be classified as an "interior" permanent magnet machine

("IPMSM"). Generally, IPMSMs may be preferred, as IPMSMs are thought to have a higher capability for field weakening than other PMSMs.

Nonetheless, the method may be applied to a wide variety of AC machines, i.e. such that the AC machine could be any one of an induction machine, a synchronous machine, a synchronous reluctance machine, a switch reluctance machine, a brushless synchronous machine. The AC machine could also be a hybrid machine which may comprise two different excitation sources (e.g. PM excitation and a field winding excitation).

In a second aspect, the invention may provide an apparatus suitable for performing a method according to the first aspect of the invention.

A second aspect of the invention may therefore provide a controller for controlling an AC machine that includes a stator and a rotor, the controller including: an observer configured to observe a stability parameter that is indicative of the stability of the AC machine and dependent on a current state of the AC machine; wherein the controller is configured to control the AC machine based on the observed stability parameter so as to promote stable operation of the AC machine.

Optional features of the second aspect of the invention will now be set out. These are applicable singly or in any combination with any aspect of the invention.

The controller may be configured to implement, or have means for implementing, any method step described in connection with any above aspect of the invention.

For example, the stability parameter may be as described in connection with the first aspect of the invention.

For example, the controller may be configured to control the AC machine based on a difference between the observed stability parameter and a reference stability parameter.

For example, the controller may be configured to control the AC machine based on the observed stability parameter such that the observed stability parameter is urged to lie within a predetermined range so as to promote stable operation of the AC machine.

For example, the controller may be configured to control the AC machine by: producing one or more reference voltages, e.g. in a 2D reference frame; producing an AC voltage based on the one or more reference voltages (e.g. configured to achieve a desired AC current and/or a desired speed and/or a desired torque at the AC machine); and supplying the AC voltage to the AC machine.

For example, the controller may include: a modulator configured to produce switching signals for controlling one or more switches of an inverter based on the one or more reference voltages; and an inverter configured to produce an AC voltage to be supplied to the AC machine based on the one or more switching signals.

For example, the controller may be configured to control the AC machine according to a direct torque control scheme, in which case: the observer may be configured to observe a torque of the AC machine; and the controller may be configured to control the AC machine based on a comparison between the observed torque and a reference torque.

For example, the controller may be configured to control the AC machine according to a direct torque and flux control scheme, in which case: the observer may be configured to observe a torque of the AC machine; the observer may be configured to observe a flux linkage of the stator of the AC machine; the controller may be configured to control the AC machine based on a comparison between the observed torque and a reference torque; and the controller may be configured to control the AC machine based on a comparison between the observed flux linkage and a reference flux linkage.

For example, if the controller is configured to control the AC machine according to a direct torque or direct torque and flux control scheme, the controller may be configured to control the AC machine based on the observed stability parameter so as to promote stable operation of the AC machine by modifying the reference torque (and/or the reference flux linkage, for a direct torque and flux control scheme) based on the observed stability parameter, more preferably based on a difference between the observed stability parameter and a reference stability parameter.

For example, the controller may be configured to operate in one or more control modes.

For example, the controller may be configured to operate in a field weakening control mode in which the controller controls the AC machine based on the observed stability parameter so as to promote stable operation of the AC machine. The controller may be configured to operate in a field weakening control mode if (preferably only if) one or more predetermined operating conditions indicating that the AC machine is operating in a field weakening region is/are met.

For example, the controller may be configured to operate in a normal control mode, e.g. in which the controller controls the AC machine without applying a field weakening technique.

The controller may be configured to operate in a normal control mode if (preferably only if) one or more predetermined operating conditions indicating that the AC machine is not operating in a field weakening region is/are met.

For example, the controller may be configured to operate in a "primary" field weakening control mode (e.g. if one or more predetermined operating conditions indicating that the AC machine is operating in a primary field weakening region is/are met) and/or in a "deep" field weakening control mode (e.g. if one or more predetermined operating conditions indicating that the AC machine is operating in a deep field weakening region is/are met).

Example operating conditions for such modes of operation have already been discussed.

For example, the controller may be configured to control the AC machine to operate as a motor (e.g. in a "motoring" mode of the controller) and/or to operate as a generator (e.g. in a "generation" mode of the controller).

The controller may be included in an apparatus including the AC machine.

The apparatus may be configured to implement, or have means for implementing, any method step described in connection with any above aspect of the invention.

For example, the rotor of the AC machine is preferably situated within the stator, but could also be an inner stator and outer rotor arrangement, to which the described control topology may also be applicable, for example.

For example, the AC machine may be a permanent magnet machine in which one or more permanent magnets are included in the rotor.

For example, the permanent magnet machine may be a PMSM, an SMPMSM or an IPMSM.

For the avoidance of any doubt, each component of the controller (e.g. the observer) may be implemented in hardware or software.

The invention also includes any combination of the aspects and preferred features described except where such a combination is clearly impermissible or expressly avoided.

Examples of our proposals are discussed below, with reference to the accompanying drawings in which:
Fig. 15 is a schematic diagram showing an apparatus including a controller for controlling a permanent magnet synchronous machine according to a field oriented control scheme in a 2D rotating reference frame using conventional field weakening techniques.

Fig. 16 is a diagram in a 2D rotating reference frame showing, for an example high-speed current controlled interior permanent magnet synchronous machine, three different operating regions for obtaining maximum torque at a given set of operating conditions, as well as voltage and current limits.

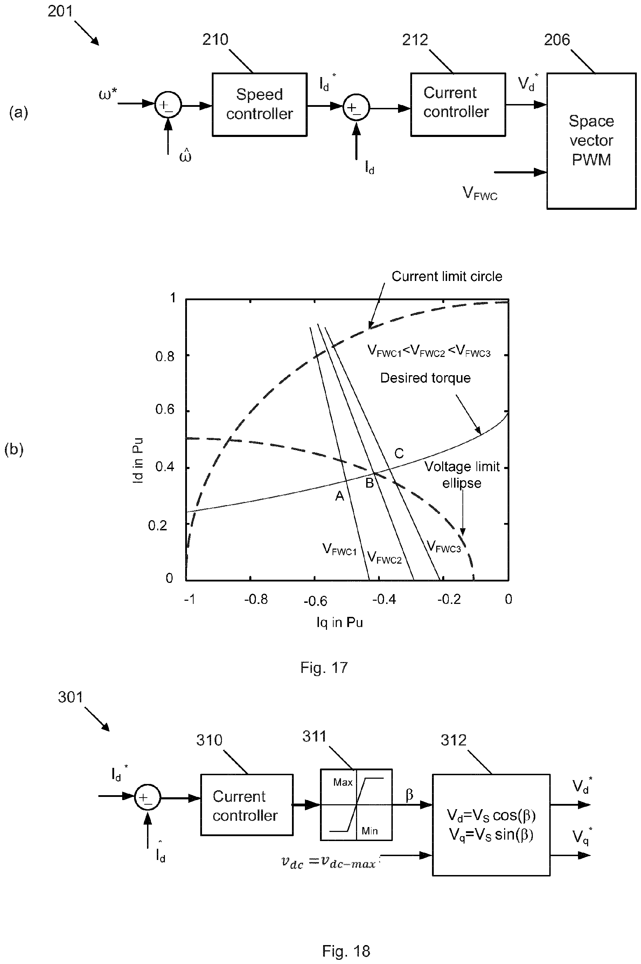

Fig. 17(a) is a schematic diagram showing a controller for a permanent magnet synchronous machine that uses field oriented control with a single current regulator in a deep field weakening mode.

Fig. 17(b) illustrates operation characteristic curves for the controller of Fig. 17(a).

Fig. 18 is a schematic diagram showing a controller for a permanent magnet synchronous machine that uses a single current regulator to find an optimum voltage angle.

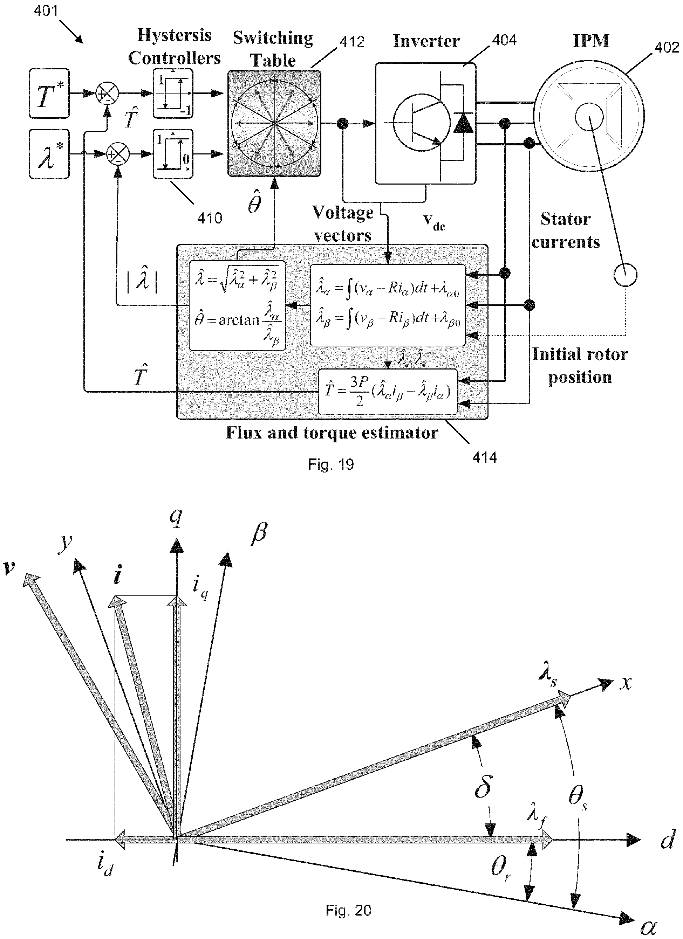

Fig. 19 is a schematic diagram showing a controller for controlling an interior permanent magnet synchronous machine according to a direct torque and flux control scheme.

Fig. 20 shows a system model for a direct torque and flux control scheme for controlling a permanent magnet synchronous machine.

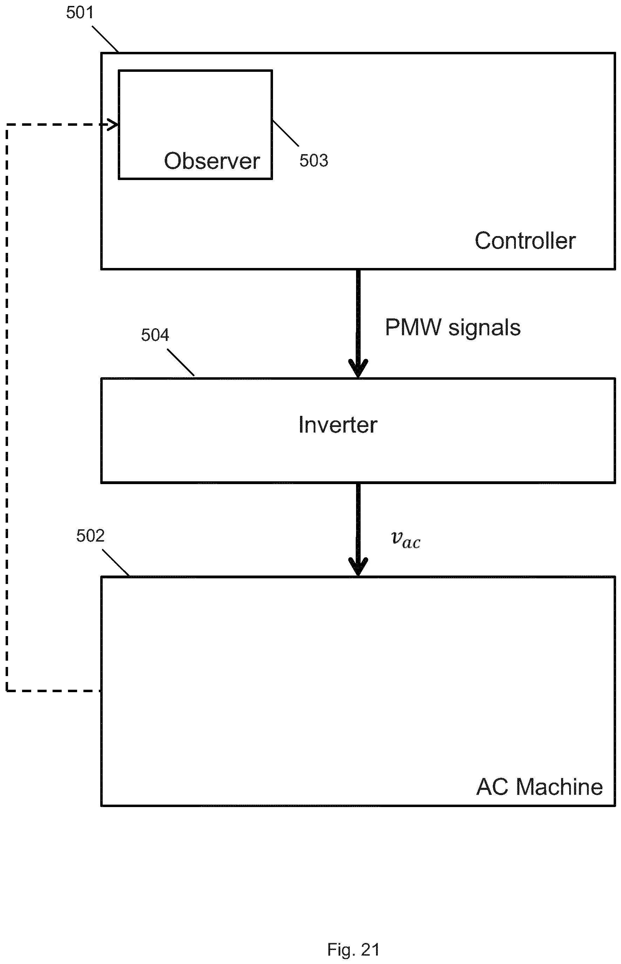

Fig. 21 is a schematic diagram showing an apparatus including a controller for an AC machine.

Fig. 22 is a schematic diagram showing an apparatus including a controller for controlling a permanent magnet synchronous machine according to a direct torque and flux control scheme.

Fig. 23 is a block diagram illustrating a proposed PI compensated stator flux linkage loop for the controller shown in Fig. 22.

Fig. 24 is a block diagram illustrating a proposed PI compensated torque loop for the controller shown in Fig. 22.

Fig. 25 is a block diagram illustrating a proposed field weakening regulator for the controller shown in Fig. 22.

Fig. 26 is a block diagram illustrating a proposed flux level and maximum torque selector for the controller shown in Fig. 22.

Fig. 27 is a flow chart describing an example control scheme for managing transitions between different control modes for the controller shown in Fig. 22.

Fig. 28 shows the MTPA (maximum torque per amp) and MTPF (maximum torque per flux) operating regions for an AC machine being controlled according to direct torque and flux control.

Fig. 29 illustrates simulation results obtained using the controller shown in Fig. 22, with the PI K regulator turned off.

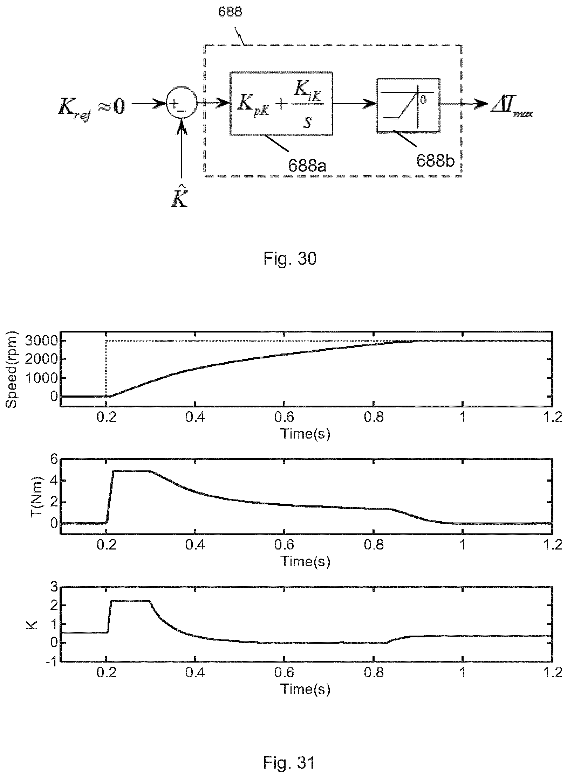

Fig. 30 is a block diagram illustrating a proposed K regulator for the controller 602 shown in Fig. 22.

Fig. 31 illustrates simulation results obtained using the controller shown in Fig. 22, with the K regulator turned on.

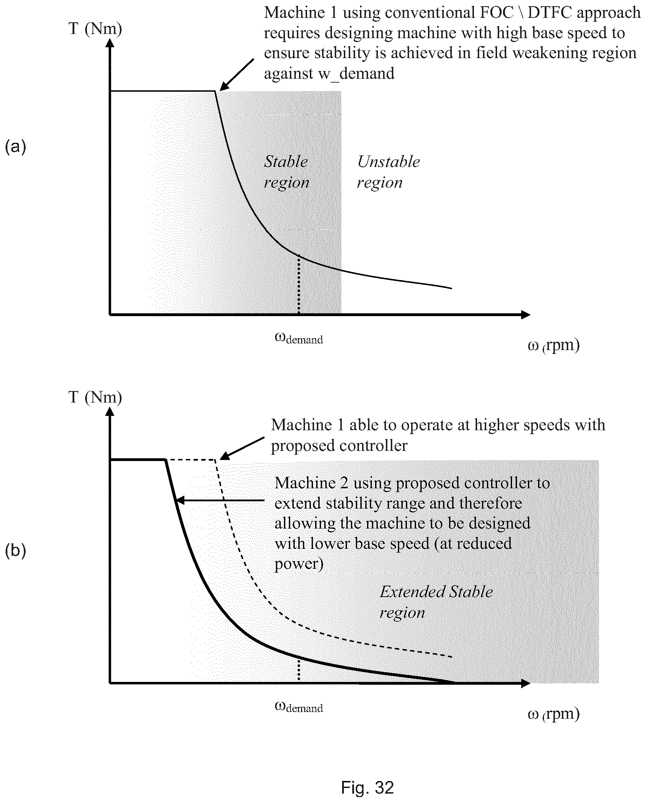

Fig. 32(a) illustrates a torque vs angular speed characteristic for an AC machine which is controlled according to a conventional FOC/DTFC scheme.

Fig. 32(b) illustrates a torque vs angular speed characteristic for an AC machine which is controlled by the controller shown in Fig. 22.

Field weakening is a widely published technique for operating an AC machine beyond its base speed. However, the inventors know of no published patent or research paper describing a method suitable for controlling an AC machine (such as a PMSM) in a deep field weakening ("DFW") region according to a direct torque and flux control (DTFC) control scheme.

Fig. 15 is a schematic diagram showing an apparatus including a controller 101 for controlling a permanent magnet synchronous machine ("PMSM") 102 according to a field oriented control ("FOC") scheme in a 2D rotating ("d-q") reference frame using conventional field weakening techniques.

The controller 101 of Fig. 15 has a three phase inverter 104, a space vector pulse width modulator ("PWM") 106, a speed regulator 110, field weakening and current regulators 112, and a reference axis transformation unit 114 for mathematically transforming the three-phase currents supplied to the PMSM 102 by the inverter 104 into the d-q reference frame.

In Fig. 15: $\omega^*$ is a reference angular speed supplied to the controller 101; $\hat{\omega}$ is an observed angular speed of the PMSM 102; $i_q^*$ is a reference current along the q-axis; $v_d^*$, $v_q^*$ are reference voltages along the d and q axes (respectively); $i_a, i_b, i_c$, are the individual phase currents of the three-phase currents drawn by the PMSM 102 by the inverter; $v_{dc}$ is a DC "link" voltage measurement supplied to the PWM signal generator 106; and $\hat{\theta}_{re}$ is a observed angle of a rotor of the PMSM 102.

In use, the PWM signal generator 106 supplies switching signals to the inverter based on $v_d^*$ and $v_q^*$. These switching signals are converted by the inverter 104 into a sinusoidal three-phase voltage that is supplied to the PMSM 102 so as to control the PMSM 102.

Fig. 16 is a diagram in a 2D rotating ("d-q") reference frame showing, for an example high-speed current controlled interior permanent magnet synchronous machine ("IPMSM"), three different operating regions I, II, III for obtaining maximum torque at a given set of operating conditions, as well as voltage and current limits.

As would be appreciated by a skilled person, the diagram of Fig. 16 would change according to the physical characteristics and operating conditions of the IPMSM.

In Fig. 16: $\omega_1$ is a first angular speed; $\omega_2$ is a second angular speed which is less than the first angular speed $\omega_1$; the curve between O and A indicates a maximum torque per ampere curve; the curve between B and C indicates a maximum torque per volt curve; Region I is a "normal" operating region in which torque increases with current; Region II is a "primary" field weakening region in which as the angular speed increases the back electro-motive force (back EMF) also increases as the voltage decreases; and Region III is a "deep" field weakening ("DFW") region in which as the angular speed increases the voltage limit circle shrinks. as the voltage decreases.

These regions of Fig. 16 are explained in more detail below.

In Fig. 16, the current limit is imposed by hardware limitations and the voltage limit is imposed by hardware limitations and the back EMF of the IPMSM.

As illustrated by Fig. 16, very high speed PMSMs have three operating regions, maximum torque per ampere (MTPA) (region I), and two flux weakening regions (regions II and III). If the machine characteristic current satisfies $\lambda_f/L_d$ < $I_{max}$, a DFW region exists (region III, i.e. B to C) which allows the machine to operate at high speeds. However, due to the voltage limit (shown by Fig. 16 as an ellipse for different speeds) the d-axis reference current $(i_d^*)$ and q-axis current $(i_q^*)$ cannot be independently controlled. Also, as the speed increases, the voltage ellipse reduces in size which ultimately reduces the operating range of the PMSM. These are among the limitations of conventional field weakening techniques.

Currently, the most popular method to overcome the voltage limitation problem referred to above is to use a single current regulator (SCR) in a DFW control mode in which, based on offline optimization, a constant quadrature axis reference voltage $(v_q^* = v_{FWC})$ is applied.

Fig. 17(a) is a schematic diagram showing a controller 201 for a permanent magnet synchronous machine ("PMSM") that uses field oriented control ("FOC") with a single current regulator ("SCR") in a deep field weakening mode.

The controller 201 of Fig. 17(a) has a space vector pulse width modulator ("PWM") 206, a speed controller 210 and a current controller 212.

Other symbols/components have already been described with reference to a previous figure and therefore need not be described in further detail.

For the controller 201 shown in Fig. 17(a), a reference current along the d-axis $i_d^*$ is controlled using a PI ("proportional-integral") speed controller 210 leaving the reference current along the q-axis $i_q^*$ to obey motor dynamics. This helps to prevent conflicts among the control variables therefore keeping the system stable even in the DFW region.

Fig. 17(b) illustrates operation characteristic curves for the controller of Fig. 17(a).

As shown in Fig. 17(b), there exist a large number of possible $v_q^* = v_{FWC}$ values, where different $v_q^* = v_{FWC}$

values are required at different operating speeds. As there is no direct way to determine the optimum $v_q^*$ online, the motor may not operate on a maximum torque per flux (MTPF) curve, resulting in suboptimum performance.

*Single current regulator with voltage angle control*

A single current regulator with voltage angle control can also be used in a field weakening mode to address the voltage limitation problem referred to above, so as to achieve MTPF (maximum torque per flux) operation. A currently preferred solution in the DFW operation uses a single current regulator ("SCR") to find an optimum voltage angle.

Fig. 18 is a schematic diagram showing a controller 301 for a permanent magnet synchronous machine ("PMSM") that uses a single current regulator ("SCR") to find an optimum voltage angle $\beta$.

The controller 301 of Fig. 18 has a speed controller 310, a component 311 for determining the optimum voltage angle $\beta$ and a current controller 312 for producing reference voltages along the d and q axes $v_d^*$, $v_q^*$ based on the optimum voltage angle $\beta$ and a maximum dc link voltage $v_{dc} = v_{dc\text{-}max}$.

Other symbols/components have already been described with reference to a previous figure and therefore need not be described in further detail.

As shown in Fig. 18, the reference voltages along the d and q axes $v_d^*$, $v_q^*$ are derived from the maximum dc link voltage $v_{dc} = v_{dc\text{-}max}$ and the optimum voltage angle $\beta$. However, operating on a MTPF (maximum torque per flux) curve depends on the accuracy of the estimation of the optimum voltage angle $\beta$. This method can derive the optimum reference voltage along the q-axis $v_q^*$ during a motoring mode of the controller 301 but the PMSM will generally face instability problems in a generation mode of the controller 301.

Fig. 19 is a schematic diagram showing a controller 401 for controlling an interior permanent magnet synchronous machine ("IPMSM") 402 according to a direct torque and flux control ("DTFC") scheme.

The controller 401 of Fig. 19 has an inverter 404, hysteresis controllers 410, a switching table 412 and a flux and torque estimator 414.

In Fig. 19: $T^*$ is a reference torque of the IPMSM 402; $\hat{T}$ is an observed torque of the IPMSM 402; $\lambda^*$ is a reference flux linkage of the stator of the IPMSM 402; $\hat{\lambda}$ is an observed flux linkage of the stator of the IPMSM 402.

Other symbols/components have already been described with reference to a previous figure and therefore need not be described in further detail.

In use, the flux and torque estimator observes (by estimating) a torque of the AC machine $\hat{T}$ and a flux linkage of the stator of the IPMSM 402 $\hat{\lambda}$. The controller 401 controls the AC machine based on a comparison between the observed torque $\hat{T}$ and the reference torque $T^*$; and based on a comparison between the observed flux linkage of the stator $\hat{\lambda}$ and the reference flux linkage of the stator $\lambda^*$.

Methods for calculating appropriate values for the reference torque $T^*$ and the reference flux linkage $\lambda^*$ to appropriately control an AC machine are very well known.

Several publications describe the direct torque and flux control ("DTFC") for PMSMs. However, unlike the controller described with reference to Fig. 22 below, none of them are designed to operate in a deep field weakening region with optimum machine performance (e.g. operation in Maximum Torque per flux curves) whilst operating in a motor or generation mode.

FOC control schemes have inherent disadvantages, particularly in speed "sensorless" operation, compared with DTFC control schemes. In particular, during flux-weakening operation in an FOC control scheme, reference currents along the d and q *axes* $i_d^*$, $i_q^*$ are established by solving the torque and voltage limit equations simultaneously. The result is a quadratic equation which is difficult to solve in real-time. Further, as the operating current for any given torque and flux command is also parameter dependant, the reference currents along the d and q axes $i_d^*$, $i_q^*$ are measured offline and stored in look-up tables. Complex 2-dimensional look-up tables for the respective reference currents along the d and q axes $i_d^*$, $i_q^*$ are required which is computationally expensive. In comparison, for a DTFC scheme control scheme, the torque and stator flux are ultimately the control variables in the drive, meaning a DTFC scheme control scheme may be seen as a viable, less computationally intensive, alternative to FOC.

As a trade-off, for a DTFC control scheme, the flux linkage of the stator generally has to be estimated. However, in a speed-sensorless drive, which is highly desirable from cost and reliability perspective, the flux linkage of the stator has to be estimated anyway. Furthermore, a DTFC control scheme generally requires no rotor coordinate transformation and is therefore can be viewed as a more suitable candidate for speed-sensorless field-weakening operation.

Stability and voltage limitations are the two main problems in a DFW operation of a PMSM. The stability problem arises from parameter variation where the controllability is lost and the motor rapidly switches between motoring and generation modes. In particular, with limited dc link voltage $v_{dc}$, it is difficult to control the reference currents along the d and q axes $i_d^*$, $i_q^*$ independently under current control.

The SCR (single current regulator) methods described above are indirect and voltage look up table is required to find voltage values optimized to operate at MTPF (maximum torque per flux) or MFPV (maximum flux per volt) curves. This results in suboptimum operation.

With FOC control schemes, two controlling techniques are required to support full operating range where two current controllers are used for MTPA (maximum torque per amp) operation and SCR (single current regulator) is used for MTPF (maximum torque per flux) operation. This demands a mode change which leads to torque disturbances during transients.

An SCR (single current regulator) with optimum voltage angle control method could generate the optimum voltage required to operate at MTPF (maximum torque per flux). However this is totally dependent on the accuracy of the estimated voltage angle. Open source publications have claimed that this method would face stability problems in generating mode hence it is not suitable for this application. Furthermore, this method cannot be extended to operate in an overmodulation region.

Direct torque and flux control schemes can be viewed as using torque and flux linkage of the stator as control variables to achieve desired performance. Ideally both torque and flux linkage of the stator should be controlled independently, but there is generally some degree of coupling between these machine parameters. In order to design robust controllers, a transfer function or the corresponding system model is preferably determined and decoupled to allow independent control of the two variables, torque and flux linkage of the stator.

Fig. 20 shows a system model for a direct torque and flux control scheme for controlling a permanent magnet synchronous machine ("PMSM").

In Fig. 20: $\lambda_s$ is a 2D vector representing the flux linkage of the stator of the PMSM; **i** is a 2D vector representing the current supplied to the stator of the PMSM; v is a 2D vector representing the voltage supplied to the stator of the PMSM; $\alpha$ - $\beta$ is a 2D reference frame that is fixed with respect to the stator of the PMSM and whose $\alpha$ -axis is aligned with the initial position of the rotor of the PMSM; x - y is a 2D reference frame whose x-axis is fixed with respect to the flux linkage $\lambda_s$ of the stator of the PMSM; d-q is a 2D reference frame that is fixed with respect to the rotor of the PMSM, and therefore rotates with respect to the stator of the PMSM; $i_d, i_q$ are the transformed currents drawn by the stator of the PMSM along the d and q axes respectively; $\lambda_f$ is the flux linkage of a permanent magnet of the AC machine; $\delta$ is a phase angle between the stator flux (x - y) and rotor (d-q) reference frames; $\theta_r$ is a phase angle between the rotor (d-q) and stator ($\alpha$ - $\beta$) reference frames; and $\theta_s$ is a phase angle between the stator flux (x - y) and stator ($\alpha$ - $\beta$) reference frames.

To allow independent control of flux linkage of the stator and torque, the x - y reference frame is preferably defined so that the x-axis is aligned with the vector representing the flux linkage of the stator $\lambda_s$ (see Fig. 20), so as to simplify the flux control. As a consequence, the transfer function is now linear and not dependent on operating conditions. The transfer functions for the x-axis and y-axis voltages may therefore be defined as:

$$v_x = i_x R_s + \frac{d|\lambda_s|}{dt}$$

$$v_y = i_y R_s + \omega_s |\lambda_s| = i_y R_s + (\omega_{re} + \frac{d\delta}{dt})|\lambda_s|$$

Neglecting the resistance, the flux linkage of the stator can be controlled directly by varying the x-axis voltage according to the relation:

$$v_x \approx \frac{d|\lambda_s|}{dt}$$

When the torque equation is derived, it can be noted that the phase angle delta ($\delta$) has a significant role. When operating in the field weakening region, the flux and currents on the each axis changes. The general torque and delta equations are defined as:

$$T = \frac{3P|\lambda_s|}{4L_d L_q}[\, 2\lambda_f L_q \sin\delta - |\lambda_s|\,(\,L_q - L_d\,)\sin 2\delta\,]$$

$$\hat{\delta} = \tan^{-1}\left(\frac{L_q\left[\hat{\lambda}_\alpha i_\beta - \hat{\lambda}_\beta i_\alpha\right]}{\sqrt{\hat{\lambda}_\alpha^2 + \hat{\lambda}_\beta^2} - L_q\left[\hat{\lambda}_\alpha i_\alpha + \hat{\lambda}_\beta i_\beta\right]}\right)$$

By taking the derivative of the torque equation and by substitution in the system equation, we can derive:

$$v_y \approx \frac{1}{K}\frac{dT}{dt} + \omega_{re}|\lambda_s|$$

where:

$$K = \frac{3P}{4L_d L_q}[\, 2\lambda_f L_q \cos\delta - 2|\lambda_s|\,(\,L_q - L_d\,)\cos 2\delta\,]$$

As described below in more detail, the inventors have observed that $K$ is a parameter that is indicative of the stability of an AC machine and that stable operation of an AC machine can be promoted by controlling the AC machine based on an observed value of $K$ such that the observed value of $K$ is urged to lie within a predetermined range of $K \geq 0$.

Preferably, a stability parameter such as $K$ is controlled with a view to ensuring that operation of the PMSM is stable at all times, including in a deep field weakening region. As explained in further detail below, $K$ can oscillate between positive and negative and is indicative of stability (and consequently instability) of the AC machine.

According to the inventors' knowledge, nobody has previously defined $K$ or reported the interesting observation of the variation of $K$ when entering into a deep field weakening region. Through controlling an AC machine based on $K$ or another suitable stability parameter, stabile operation of an AC machine can be promoted.

Fig. 21 is a schematic diagram showing an apparatus including a controller 501 for an AC machine 502.

In Fig. 21, the controller 501 includes an observer 503 and feeds switching signals into a power inverter 504 from which an AC voltage $v_{ac}$ is fed to the AC machine 502.

The controller 501 is preferably configured to control the AC machine 502 by: producing one or more reference voltages, e.g. in a 2D reference frame. The controller 501 preferably includes a modulator (not shown) configured to produce switching (e.g. PWM) signals for controlling one or more switches of the inverter 504 based on the one or more reference voltages. The inverter 504 is preferably configured to produce an AC voltage $v_{ac}$ to be supplied to the AC machine 502 based on the switching signals. The produced AC voltage $v_{ac}$ may be a three-phase AC voltage and may be configured to achieve a desired AC current and/or a desired speed and/or a desired torque at the AC machine.

The controller 501 preferably includes an observer 503 configured to observe a stability parameter that is indicative of the stability of the AC machine 502 and dependent on a current state of the AC machine 502. The observer 503 could, for example, be configured to observe the stability parameter at regular intervals. Observing the stability parameter may include estimating the stability parameter, and may be based on one or more measurements from the apparatus including the AC machine 502 and/or based on one or more parameters (e.g. reference values such as the reference voltages described above) used to control the AC machine 502.

Observing the stability parameter based on measurements from the apparatus is optional, hence the dashed line from the AC machine to the observer 503 in Fig. 21. The stability parameter could nonetheless be calculated from measurements from the apparatus.

The controller is preferably configured to control the AC machine 502 based on the observed stability parameter, preferably such that the observed stability parameter is urged to lie within a predetermined range, so as to promote stable operation of the AC machine. For example, if the stability parameter were $K$ as defined above, then the controller 501 may be configured to control the AC machine 502 based on an observed stability parameter $\hat{K}$ such that the observed stability parameter is urged to lie within a predetermined range of $K \geq 0$ so as to promote stable operation of the operation of the AC machine 502, e.g. by inhibiting/substantially preventing torque ripple.

Fig. 22 is a schematic diagram showing an apparatus including a controller 601 for controlling a permanent magnet synchronous machine ("PMSM"), preferably an interior permanent magnet synchronous machine ("IPMSM") 602, according to a direct torque and flux control ("DTFC") scheme.

An Interior Permanent Magnet Synchronous Machine (IPMSM) is shown as an example of AC machine. The controller 601 may be configured to operate the IPMSM 602 as a motor (e.g. in a "motoring" mode of the controller 601, as depicted in Fig. 22) and/or as a generator (e.g. in a "generation" mode of the controller 601).

For clarity, the controller 601 may be viewed as being divided into six regions: a power electronics and SVM region 600, a DC bus voltage control region 620, a speed control region 630, a direct torque and flux control (DTFC) region 640, an observer region 660 and a field weakening control region 680. The controller 601 also includes a mode selector 625. The power electronics and SVM region 600 preferably includes the power inverter 604 and a space vector modulator ("SVM") 606. Note that whilst the power inverter will generally be implemented as hardware (and may be referred to as forming part of the "power electronics" of the controller 601), the SVM 606, DC bus voltage control region 620, speed control region 630, DTFC region 640, observer region 660, field weakening control region 680 and mode selector 625 will generally be implemented as software.

In use, an observed (e.g. measured) DC "link" voltage $v_{dc}$ is preferably supplied to the SVM 606 which preferably uses the observed DC "link" voltage $v_{dc}$ to produce switching signals, preferably based on reference voltages in the $\alpha$ - $\beta$ frame from the DTFC region 640. These switching signals are preferably supplied to the inverter 604. The inverter preferably produces e.g. a sinusoidal three-phase voltage based on the switching signals, which is preferably supplied to the PMSM 602 so as to operate the PMSM 602 as a motor or generator.

The mode selector 625 is preferably configured to appropriately select the outer loop to achieve the required reference torque. In motoring mode, the Mode selector will use the speed control 630 and in generation mode the mode selector shall use the DC bus voltage control 620. The DC bus voltage control region 620 and the speed control 630 preferably each include a PI ("proportional-integral") voltage regulator 622 and 632 respectively.

In generation mode, the PI voltage regulator 622 preferably produces a control output based on a difference between the square of a reference DC link voltage $v_{dc}^{2*}$ and the square of an observed DC link voltage $v_{dc}^2$. A flux level and maximum torque selector 684, together with a torque limiter 686, is preferably used to develop a reference torque $T_{ref}^*$ as will be described in more detail below. The reference DC link voltage $v_{dc}^*$ may be a fixed voltage determined by hardware/system requirements.

In motoring mode, the PI voltage regulator 632 preferably produces a control output based on a difference between the reference speed $\omega_{ref}^*$ and the observed (e.g. measured, estimated or calculated) speed $\omega_m$. Again, a flux level and maximum torque selector 684, together with a torque limiter 686, is preferably used to develop a reference torque $T_{ref}^*$ as will be described in more detail below.

The DTFC region 640 preferably includes a PI ("proportional-integral") flux regulator 642, a PI ("proportional-integral") torque regulator 644 and a converter 646.

In use, the PI flux regulator 642 preferably produces a reference voltage $v_x^*$ along the $x$ - axis of the $x$ - $y$ frame based on a comparison between an observed (in this case estimated) flux linkage of the stator (of the IPMSM) $\hat{\lambda}_S$ and a reference flux linkage of the stator $\lambda_{ref}^*$. The PI flux regulator 644 preferably produces a reference voltage $v_y^*$ along the $y$-axis of the $x$ - $y$ frame based on a comparison between an observed (in this case estimated) torque (of the IPMSM) $\hat{T}$ and a reference torque $T_{ref}^*$. The converter 646 preferably converts the reference voltages $v_x^*$, $v_y^*$ in the $x$ - $y$ frame into the $\alpha$ - $\beta$ frame to produce $v_\alpha^*$, $v_\beta^*$, based on an observed (in this case estimated) phase angle between the stator flux ($x$ - $y$) and stator ($\alpha$ - $\beta$) reference frames $\hat{\theta}_S$. The observed values $\hat{\lambda}_S$, $\hat{T}$ and $\hat{\theta}_S$ are preferably produced by the observer region 660, as will now be described.

The observer region 660 preferably includes an observer 662 and a converter 664. The converter 664 preferably converts measurements of the three-phase current $i_a, i_b, i_c$ supplied to the PMSM 102 by the inverter 604 into the $\alpha$ - $\beta$ frame to produce $i_\alpha, i_\beta$.

The observer 662 preferably receives the reference voltages $v_\alpha^*$, $v_\beta^*$ in the $\alpha$ - $\beta$ frame from the converter 646 of the DTFC region 640 and the measured currents $i_\alpha, i_\beta$ in the $\alpha$ - $\beta$ frame from the converter 664, and preferably uses these values to observe (in this case estimate): the phase angle between the stator flux ($x$ - $y$) and stator ($\alpha$ - $\beta$) reference frames $\theta_S$ to obtain an observed value $\hat{\theta}_S$; the flux linkage of the stator $\lambda_S$ to obtain an observed value $\hat{\lambda}_S$; and

the torque of the IPMSM $T$ to obtain an observed value $\hat{T}$.

The field weakening control region 680 preferably includes a PI ("proportional-integral") field weakening regulator 682, a flux level and maximum torque selector 684 and a torque limiter 686.

In use, a preliminary reference flux linkage of the stator $\lambda_{ref\text{-}pre}$ is preferably developed from a maximum DC link voltage $v_{dc-\max} = v_{dc} / \sqrt{3}$ and an estimated angular speed of the rotor $\hat{\omega}_{re}$ as $\lambda^*_{ref-pre} = v_{dc-\max} / \hat{\omega}_{re}$. However, at low speeds when the field weakening is not required flux reference is given from the MPTA look up table 684a described with reference to Fig.12 below, the required flux reference is preferably given from the flux level and maximum torque selector described in more detail with reference to Fig. 26 below.

In a normal control mode (e.g. as defined below), the AC machine 602 may be operated in an MTPA region below the base speed, in which case the flux reference may be obtained from look up table 684c described with reference to Fig. 26 below.

In a field weakening control mode (e.g. as defined below), the preliminary reference flux linkage $\lambda_{ref\text{-}pre}$ may be used as the reference flux linkage of the stator $\lambda^*_{ref}$, which is supplied to the DTFC region 640 and the lookup table 684c described with reference to Fig. 26 below.

However, in a field weakening control mode (e.g. as defined below), the preliminary reference flux linkage $\lambda^*_{ref-pre}$ is preferably modulated by a flux linkage reference modifier $\Delta_{ref}$ to produce the reference flux linkage of the stator $\lambda^*_{ref}$, which is preferably supplied to the DTFC region 640 and the lookup table 684c described with reference to Fig. 26 below .

The lookup table 684c described with reference to Fig. 26 below is preferably used to calculate a maximum torque value $T_{\max}$ based on the reference flux linkage of the stator $\lambda^*_{ref}$. The torque limiter 686 preferably calculates a preliminary reference torque $T^*_{ref-pre}$ based on the control output from the PI voltage regulator 622 of the DC bus voltage control region 620 and the maximum torque value $T_{\max}$ from the lookup table 684c described with reference to Fig. 26 below.

If the controller is in a normal control mode (e.g. as defined below), then the preliminary reference torque $T^*_{ref-pre}$ may be used as the reference torque $T^*_{ref}$, which is supplied to the PI torque regulator 644 of the DTFC.

In certain respects, the functionality of the controller 601 described so far represents a highly optimized implementation of known techniques for controlling an IPMSM.

However, the performance of the controller 601 has been enhanced by making various additions and modifications which will now be described.

Firstly, the observer 662 of the observer region 660 is preferably modified to observe (in this case estimate), using the reference voltages $v^*_{\alpha}$, $v^*_{\beta}$ and the measured currents $i_\alpha, i_\beta$ in the $\alpha$ - $\beta$ frame, the stability parameter $K$ to obtain an observed value $\hat{K}$.

Also, a ("proportional-integral") $K$ regulator 688 is preferably added to the field weakening control region 680. In use, the $K$ regulator 688 preferably produces a reference torque modifier $\Delta T_{ref}$ based on a difference between the observed stability parameter $\hat{K}$ and a reference stability parameter $K_{ref}$.

In a field weakening control mode (e.g. as defined below), the preliminary reference torque $T^*_{ref-pre}$ is preferably modified/modulated by the reference torque modifier $\Delta T_{ref}$ to produce the reference torque $T^*_{ref}$, which is supplied to the PI torque regulator 644 of the DTFC.

The reference torque modifier $\Delta T_{ref}$ preferably controls the reference torque $T^*_{ref}$ in a deep field weakening control mode such that the observed stability parameter $\hat{K}$ is urged to fall within the predetermined range $K \geq 0$. This may be achieved by setting the reference stability parameter $K_{ref}=0$. However, setting $K_{ref}=0$ might result in $\hat{K}$ occasionally falling very briefly outside of the predetermined range. Accordingly, it is preferable for the reference stability parameter $K_{ref}$ to be set at just above zero ($K_{ref}\approx 0$), e.g. $K_{ref}=0.05$, In this way, the controller is able to urge $\hat{K}$ toward the predetermined

range $K{\geq}0$ as $\hat{K}$ approaches zero (rather than when is at or below zero), preferably so that the observed stability parameter $\hat{K}$ lies within the predetermined range $K{\geq}0$ for all of the time whilst the AC machine is operated in a deep field weakening control mode.

In this way, stable operation of the IPMSM 602 can be achieved, even when the AC machine is operated in a deep field weakening operating region.

As can be seen from Fig. 22, independent closed-loop torque and stator flux regulation is preferably performed in the stator flux ($x$ - $y$) reference frame, preferably via the two PI controllers 642, 644 in the DTFC region of the controller 602.

The analysis of the transfer functions previously described showed that whilst the flux loop is linear with respect to the $x$-axis voltage component, the torque varies in a highly nonlinear fashion with respect to the $y$-axis voltage. The influence of this nonlinearity has already been examined and the controller 602 shown in Fig. 22 has been designed to urge the observed stability parameter $\hat{K}$ to fall within the predetermined range of $K{\geq}0$, when the controller is operated in a second ("deep") field weakening mode.

As would be appreciated by a skilled person, various changes could be made to the controller 601 described in with reference to Fig. 22.

For example, a different type of AC machine may be used in place of the IPMSM 602.

For example, whilst the controller 601 is for controlling the IPMSM 602 according to a DTFC control scheme, the controller could be configured to implement a different control scheme, whilst still controlling the IPMSM 602 based on the observed stability parameter $\hat{K}$ so as to promote stable operation of the IPMSM 602.

For example, a stability parameter other than $K$ could be observed and used to control the IPMSM 602 so as to promote stable operation of the IPMSM 602.

For example, many of the parameters which are observed in Fig. 22 (e.g. $\hat{T}$ and $\hat{\theta}_s$) could be observed by direct measurement rather than being estimated.

For example, regulators other than PI regulators (e.g. PID regulators) could be used in place of the PI regulators of Fig. 22. Thus, for example, hysteresis controllers could be used instead of PI controllers, controlled variables in $x$ - $y$, $\alpha$ - $\beta$ and/or d-q reference frames could be transformed into abc reference frame and/or controlled using P+ resonance controllers with variable resonance frequency e.g. to account for the speed variation and/or hysteresis controllers could be employed in abc reference frame

Fig. 23 is a block diagram illustrating a proposed PI compensated stator flux linkage loop for the controller 602 shown in Fig. 22.

Fig. 24 is a block diagram illustrating a proposed PI compensated torque loop for the controller 602 shown in Fig. 22.

Torque loop linearization is preferably undertaken for both the PI regulators 642, 644 shown in Fig. 23 and Fig. 24. Note here that the coefficients $K_{p\lambda}$, $K_{i\lambda}$, $K_{pT}$, and $K_{iT}$ are internal parameters used by the PI controllers and are not to be confused with the preferred stability parameter $K$. The parameter $s$ represents the transfer functions for $v_x$ and $v_y$, which functions have already been described above with reference to Fig. 20.

Particular consideration is to be given to the PI compensated torque loop shown in Fig. 24 which is more complex in comparison to the stator flux linkage loop because the preferred stability parameter $K$ varies with operating conditions and is preferably urged to fall within the predetermined range of $K{\geq}0$, when the controller is operated in a deep field weakening control mode so as to promote stable operation of the IPMSM 602.

Fig. 25 is a block diagram illustrating a proposed field weakening regulator (in this instance a $y$-axis voltage regulator) for the controller 602 shown in Fig. 22.

Fig. 26 is a block diagram illustrating a proposed flux level and maximum torque selector 684 for the controller 602 shown in Fig. 22.

Note here that the coefficients $K_{pV}$, $K_{iV}$ are internal parameters used by the PI controller and are not to be confused with the preferred stability parameter $K$.

In Fig. 26, the flux level and maximum reference torque selector 684 takes two input signals: a reference torque $T_{ref}^*$ and a flux reference $\left|\lambda_{ref}^*\right|_{FW}$ derived from the field weakening regulator 684. The reference torque $T_{ref}^*$ is used to derive the flux reference $\left|\lambda_{ref}^*\right|_{MTPA}$ required to operate at Maximum Torque per Ampere MTPA curve from the look up table 684a. The comparator 684b compares $\left|\lambda_{ref}^*\right|_{FW}$ and $\left|\lambda_{ref}^*\right|_{MTPA}$ then the smallest value is chosen as the required flux reference $\lambda_{ref}^*$ for the DTFC 640. Then flux reference $\lambda_{ref}^*$ is used to find the maximum $T_{max}$ from the lookup table 684c and will be applied at the torque limiter 686.

Flux weakening is achieved autonomously once the *y*-axis voltage exceeds the available inverter voltage as shown by Fig. 25 and Fig. 26.

Fig. 27 is a flow chart describing an example control scheme for managing transitions between different control modes for the controller 601 shown in Fig. 22.

The example control scheme shown in Fig. 27 essentially defines two control modes: a "normal" control mode and a "field weakening" control mode.

As shown in Fig. 27, the AC machine is controlled in a "normal" control mode when the following condition is met: $v_y \leq v_{dc} / \sqrt{3}$ .

As also shown in Fig. 27, the AC machine is controlled in a "field weakening" control mode when the following condition is met: $v_y > v_{dc} / \sqrt{3}$ .

Note that $v_y > v_{dc} / \sqrt{3}$ is an operating condition indicating that the AC machine is operating in a field weakening region. However, it is to be noted that additional/alternative operating conditions could be used to determine the control modes of the controller 601.

For the example control scheme shown in Fig. 27, a field weakening technique which requires the controller 601 to operate in MTPF (maximum torque per flux) curve to extract the maximum power is used in the field weakening control mode.

However, in the field weakening mode, the AC machine 602 is additionally controlled based on the observed stability parameter $\hat{K}$, such that if the operating condition $\hat{K} \leq K_{ref}$ is met, the observed stability parameter $\hat{K}$ is urged by the *K* regulator 688 to lie within the predetermined range $K \geq 0$, so as to promote stable operation of the AC machine.

Fig. 28 shows the MTPA (maximum torque per amp) and MTPF (maximum torque per flux) operating regions for an AC machine being controlled according to direct torque and flux control.

In Fig. 28, an AC machine operates along the curves to achieve the maximum power or torque for particular operating current or voltage.

Whilst an AC machine could operate below the MPTA and MTPF curves, this would not yield optimal performance.

An AC machine is generally required to operate in the DFW region (Region III in Fig. 28) to achieve very high speed operation. This region generally exists only if the machine characteristic current obey the relationship $\lambda_f / L_d < I_{max}$. Care has to be taken when moving along the MTPF (maximum torque per flux) curve (which is required for maximum power extraction) to ensure instability doesn't occur. As explained above, one of the causes of instability is due to the variation in the preferred stability parameter *K* which arises due to operating condition variations.

Fig. 16 and Fig. 28 define different operating regions in comparison to different control variables. When the control variables are voltage and current, Fig. 16 is more relevant.

To explain the field weakening operation of the AC machine 602 when the control variables are voltage and current, Fig. 16, Fig. 22, Fig. 25 and Fig. 26 may be referred to. As shown in Fig. 16, operating Region I corresponding to Maximum torque per Ampere operation and operating Region II and III correspond to field weakening regions

Region I in Fig. 16 (the area below the curve O to A) may define "normal" operation of the AC machine 602, where the machine operates below the base speed. In this operation the flux reference is derived from the Maximum torque per Ampere curve from the look up table 684a shown in Fig. 26. Here, the flux reference may referred as the base flux level, since it generally has a constant value when the AC machine 602 operates in this region. Here, the speed of the machine is below the base speed.

Region II in Fig. 16 (the area below the curve A to B) may define a "primary field weakening" region or "normal field weakening" region, where the AC machine 602 operates above the base speed. The curve A to B represents the intersection points of the maximum current circle and corresponding voltage ellipse, hence the operation is generally limited by the maximum current handling capability of machine and/or power electronics. Field weakening (which may also be referred to as "flux weakening") is preferably applied to prevent the machine from operating above the maximum current limit circle. Fig. 25 shows a preferred field weakening regulator. The flux reference has two parts one based on the maximum voltage and the base speed $\lambda^*_{ref-pre} = v_{dc-max} / \hat{\omega}_{re}$ and the other flux modifier $\Delta\lambda_{ref}$ derived based on the y- axis voltage regulator. When the voltage is not constrained the y-axis regulator is clamped to zero that is $\Delta\lambda_{ref} = 0$ . When machine operated on curve AB where the voltage limit also constrained the y-axis voltage limit controller may activated by the limiter as shown in Fig. 25. That is when the machine is operated above base speed and on the current limit circle would preferably be clamped to zero when operated below the curves.

Region III in Fig. 16 (the area below curve B to C) may define a "deep field weakening" region, where the operation of the machine is limited by the voltage limit of the machine and/or power electronics. Here, the flux needs to be reduced based on the output voltage level. Hence output of the PI field weakening regulator 682 is preferably not clamped to zero, that is $\Delta\lambda_{ref} \leq 0$.

In the entire field weakening region, that is both Regions II and III in Fig. 16, the same field weakening regulator 682 is preferably used. However this voltage based regulator 682 is mainly required in the deep field weakening region (i.e. Region III in Fig. 16) where the machine operated in Maximum torque per volt trajectory, since operation of the AC machine will generally be stable in Region II.

Example indicators of primary field weakening operation may include: operating speed being above the base speed; the flux reference from field weakening flux regulator (as shown in Fig. 25) being less than the base flux level used in for the MTPA look-up table 684a shown in Fig. 26.

Example indicators of deep field weakening operation may include: Operating speed being above the base speed; the output flux reference of the PI field weakening flux regulator 682 being negative $\Delta\lambda_{ref} \leq 0$, that is operation is constrained by the voltage limits. Behaviour of the $K$ value (e.g. $\hat{K} \leq K_{ref}$) could be used as an indicator of deep field weakening operation, but this is not, in general, a necessary and sufficient condition to conclusively determine operation in the deep field weakening region.

To explain field weakening operation for direct torque controlling, Fig. 28, Fig. 22 and Fig. 26 and Fig. 27 may be referred to. When the control variables are flux and torque, Fig. 28 is more relevant than Fig. 16 described above.

Fig. 28 illustrates the operating regions of the DTFC-IPMSM drive mapped onto the torque-flux plane. Under any operating condition, the operating torque and flux of the IPMSM must always be bounded by the maximum torque per ampere (MTPA), current limit and maximum torque per flux (MTPF) trajectories. The operation of the IPMSM can be divided into two regimes - MTPA and field weakening.

A. MTPA Trajectory

The MTPA trajectory can be mathematically described as

$$\begin{cases} |\lambda_s| = \sqrt{(\lambda_f^2 - (\dfrac{L_d^2}{L_q - L_d}) + L_q - L_d)\lambda_f i_d + (L_d^2 + L_q^2)i_d^2} \\ T = \dfrac{3}{2}P[\lambda_f + (L_d - L_q)i_d]\sqrt{i_d^2 - \dfrac{\lambda_f}{L_q - L_d}i_d} \end{cases} \qquad (1)$$

The intermediate variable $i_d$ can be eliminated from (1) to obtain a direct relationship between the torque and flux. The MTPA path is always traversed when the reference stator voltage is below the available inverter dc-link voltage i.e. below base speed to achieve a higher overall efficiency.

B. Field Weakening Trajectory

On the other hand, flux weakening is pursued when the maximum inverter voltage is reached to avoid torque controller saturation i.e. above base speed. The field weakening trajectory which is comprised of the current limit, voltage limit (not shown) and MTPF conditions can be broadly classified into three regions.

Region I: In this region, both MTPA and flux weakening operations are possible as illustrated in Fig. 28. Hence, it is also called the *partial field weakening* region and the load primarily determines the control action. If the reference torque exceeds the maximum voltage limit, flux weakening mode is selected from Fig. 26. Otherwise, MTPA control is chosen although the operating speed is above the base speed.

Region II: Due to the absence of other control alternatives, this region along with region III are also called the *full field weakening* region. For a given flux reference, the maximum torque available in region II is governed by

$$\begin{cases} |\lambda_s| = \sqrt{(L_d i_d + \lambda_f)^2 + L_q^2(I_{max}^2 - i_d^2)} \\ T = \dfrac{3}{2}P[\lambda_f + (L_d - L_q)i_d]\sqrt{I_{max}^2 - i_d^2} \end{cases} \qquad (2)$$

where $I_{max}$ is the maximum current of the machine. Again, the intermediate variable $i_d$ can be eliminated from (2) to obtain a direct relationship between the torque and flux.

Region III: This region only exists if the machine characteristic current $\lambda_f / L_d > I_{max}$. The MTPF trajectory is pursued at very high speeds with no theoretical speed limit. For a given flux reference, the maximum obtainable torque is dictated by

$$\begin{cases} |\lambda_s| = \sqrt{\Delta^2 + (L_q i_q)^2} \\ T = \frac{3}{2} P i_q [ \frac{L_q}{L_d} \lambda_f - (L_d - L_q)\Delta ] \end{cases} \quad (3)$$

where $\Delta = \dfrac{L_q \lambda_f - \sqrt{(L_q \lambda_f)^2 + 8(L_d - L_q)^2 |\lambda_s|^2}}{4 L_d (L_d - L_q)}$. The intermediate variable $i_q$ can be eliminated from (3) to obtain a direct relationship between the torque and flux.

Fig. 29 illustrates simulation results obtained using the controller 601 shown in Fig. 22, with the $K$ regulator 688 turned off.

Fig. 30 is a block diagram illustrating a proposed $K$ regulator 688 for the controller 602 shown in Fig. 22.

In the $K$ regulator 688 shown in Fig. 30, a limiter 688b preferably prevents the action of a PI $K$ controller 688a from disturbing the normal operation of the AC machine 602 when it is operating in stable manner, e.g. when the controller 601 is operating in a normal control mode (as defined above). In this way, the $K$ regulator 688 is only turned on when it is needed.

Fig. 31 illustrates simulation results obtained using the controller 601 shown in Fig. 22, with the $K$ regulator 688 turned on.

As shown by Fig. 29, $K$ is a variable which is positive in regions I and II, but which could goes negative in region III. This results in positive feedback and oscillatory behaviour from the AC machine. As described above, the controller 601 observes $K$ and adjusts the reference torque $T_{ref}^*$ to preferably prevent the positive feedback, so as to inhibit, preferably prevent, torque ripple. This allows the machine to operate in region III shown in Fig. 29.

As can be seen from Fig. 31, it is preferably ensured that $K \geq 0$ under all operating conditions to ensure negative feedback in the torque loop. Note here that a negatived will create an unstable torque loop by providing positive feedback.

The absolute limit on the MTPF (maximum torque per flux) trajectory for operation along this curve results in $K = 0$. However, when the MTPF (maximum torque per flux) trajectory is accounted for at high speeds, the instability from $K < 0$ has been found not to arise.

Again care must be taken as torque ripples may easily lead the torque loop into the region of instability. This is shown by the simulation results of the torque response and $K$ when accelerated from standstill to 3000 rpm, see Fig. 29.

In connection with Fig. 29, it is to be observed that $K$ starts to oscillate between positive and negative regions from approximately 2200 rpm. During negatived $K$ the motor torque rapidly falls forcing $K$ to positive and hence regaining stability for a brief period before becoming unstable again. Due to controller instability, the rotor speed never reaches its reference value. This kind of drive performance is generally unacceptable in a practical situation. Although this problem will not be present under current (FOC) control, for reasons described above, FOC control can suffer from suboptimum operation making it difficult to achieve MTPF (maximum torque per flux).

The $K$ regulator shown in Fig. 30 helps to ensure stability of the torque loop by preventing the $K$ value from becoming negative. Observer 662 is used to estimate the value of $K$ using

$$\hat{K} = \frac{3P}{4 L_d L_q} [ 2\lambda_f L_q \cos\hat{\delta} - 2|\lambda_s| (L_q - L_d) \cos 2\hat{\delta} ]$$

and $K$ is controlled using the $K$ regulator 688 to regulate the observed $K$ ($\hat{K}$) to approximately zero in the MTPF (maximum torque per flux) region. The reference $K$ value $K_{ref}$ is preferably kept slightly larger than zero (e.g. 0.05) to account for parameter mismatches and estimation errors in phase angle between an axis of a 2D reference frame ($\hat{\delta}$). The output of the controller preferably observes/monitors and adjusts the reference torque $T_{ref}^*$ to ensure that $K$ is within the stable predetermined range $K \geq 0$, i.e. on or below the MTPF (maximum torque per flux) trajectory. When $K$ tries to go negative, the controller preferably introduces a small perturbation $\Delta T_{ref}$ to the reference torque $T_{ref}^*$, which is preferably subtracted from a preliminary reference torque $T^{*}_{ref-pre}$. Hence if the observed torque $\hat{T}$ accurately tracks the reference torque $T^{*}_{ref}$, $K$ will generally remain positive ensuring stability of the PI torque regulator 644.

Note that in the normal control mode, the $K$ regulator 688 is preferably turned off, e.g. by clamping the output of this regulator at zero using the limiter 688b described with reference to Fig. 30 to avoid interference.

Performance of the controller 601 shown in Fig. 22 has been verified through a simulation model developed in Matlab/Simulink, with the results presented in Fig. 31. Note that with the $K$ regulator 688 turned on, the IPMSM 601 reaches the reference speed without becoming unstable.

Industry requirements for civil and defence aircrafts are growing and driving the need for More Electric Aircraft (MEA). Advances in power electronics and electrical machines have permitted the use of an Electric Starter Generator (ESG) coupled to a gas turbine engine. Such generators operate at very high speed and the electric machine may enter into DFW (deep field weakening) operation where stability and maximum power generation are key concerns. The present invention seeks to facilitate full exploitation of electrical machine capability with maximum power extraction while ensuring stable operation, without introducing disturbance to the connected mechanical system.

The present invention is thought to be applicable for motor drivers which operate at very high speeds in both motoring and generation modes. In addition, the present invention is also thought to be applicable to hybrid electrical vehicles, electric trains and industrial drives.

This present invention may be employed on a permanent magnet synchronous machine, as described above in connection with Fig. 22. However, with simple modification to the observer, the controller described above with reference to Fig. 22 could also be employed to other AC machine topologies such as induction machines or switch reluctance machines. The controller could also be modified to support over modulation operation which could allow full utilization of the power inverter, which could further increase the operating speed and torque range. Note that this may require solving the anti-windup of the torque regulator.

The present invention may allow an embedded machine to be operated at a higher speed without becoming unstable. This has benefits for the size of the machine (i.e. it could be made to operate stably at higher speeds if it is made larger).

This invention preferably supports the control of permanent magnet machines (both salient and non-salient machines) which operates in full speed range including a deep field weakening (DFW) region. Preferably, the present invention is applicable to electrical starter generators operating at very high speed during generation mode. The invention preferably allows operating in DFW whilst accurately ensuring stability for maximum power extraction.

The present invention may also bring extra benefits and options to the field of machine design, as will now be described.

Fig. 32(a) illustrates a torque vs angular speed characteristic for an AC machine which is controlled according to a conventional FOC/DTFC scheme.

As illustrated by Machine 1 in Fig. 32(a), a conventional approach when designing an AC machine having a high base speed yet stable operation in a deep field weakening region would be to over rate the electrical machine torque and speed design point, to ensure stability is achieved. This approach will generally mean that Machine 1 has a large volume, weight and cost.

Fig. 32(b) illustrates a torque vs angular speed characteristic for an AC machine which is controlled by the controller 601 shown in Fig. 22.

As illustrated schematically by Fig. 32(b), in the case of using the controller 601 shown in Fig. 22, Machine 1 is able to operate at higher speeds compared with a conventional approach.

As also illustrated in Fig. 32(b), in the case of using the controller 601 shown in Fig. 22, designing an AC machine having a high base speed yet stable in a deep field weakening region may now be achievable by Machine 2. Machine 2 is designed with a lower base speed, but by using the controller 601 shown in Fig. 22, machine stability is preferably nonetheless attained. This may be achieved at lower machine volume, weight and cost compared with Machine 1. Note that this means that Machine 2 will generally have a lower power level than Machine 1.

## Claims

1. A method of controlling an AC machine that includes a stator and a rotor, wherein the method includes, whilst operating the AC machine according to an overmodulation technique:

   determining a reference speed $(\omega^{*}_{s})$ for controlling the operation of the AC machine;

filtering the reference speed such that if the reference speed $(\omega_s^*)$ exceeds a speed limit $(\omega_{s(max)})$ of the AC machine, the reference speed $(\omega_s^*)$ is reduced towards that speed limit; and

controlling the operation of the AC machine based on the filtered reference speed ( $\omega_{s(\text{lim})}^*$ )

wherein controlling the operation of the AC machine based on the filtered reference speed $(\omega_{s(\text{lim})}^*)$ includes:

producing a reference voltage $(v_y^*)$ based on the filtered reference speed; and

controlling the operation of the AC machine based on the reference voltage $(v_y^*)$; and,

wherein the reference voltage $(v_y^*)$ is obtained by multiplying the filtered reference speed $(\omega_{s(\text{lim})}^*)$ by a reference flux linkage $(\lambda_s^*)$ ..

2. A method according to claim 1, wherein determining the reference speed is based on a comparison between an observed torque of the AC machine and a reference torque.

3. A method according to any previous claim, wherein the method includes controlling the operation of the AC machine based on the closed loop transfer function:

$$T = \frac{K_p s + K_i}{\frac{1}{K}s^2 + K_p s + K_i} \left\{ T^* - \frac{s + K_a K_i}{K_p s + K_i}\left(\omega_s^* - \omega_{s(\text{lim})}\right) \right\}$$

where:

$T$ = an observed torque of the AC machine

$T^*$ = a reference torque used to control the AC machine  $\omega_s^*$ = the reference speed
$\omega_{s(\text{lim})}$ = the filtered reference speed $K_p, K_i$ = PI regulator parameters
$s$ represents the s domain or transfer function
$K$ = a stability parameter

4. A method according to any previous claim, wherein the method includes controlling the AC machine according to a direct torque and flux control scheme, the method including:

observing a torque of the AC machine;
observing a flux linkage of the stator of the AC machine;
controlling the AC machine based on a comparison between the observed torque and a reference torque; and
controlling the AC machine based on a comparison between the observed flux linkage and a reference flux linkage.

5. A method according to any previous claim, wherein the AC machine is controlled according to an overmodulation technique in which the sum of $\alpha$ and $\beta$ switching times is driven towards a switching period of a modulator used to produce switching signals that are supplied to the AC machine via an inverter.

6. A method according to claim 5, wherein the sum of the $\alpha$ and $\beta$ switching times is driven towards the switching period of the modulator by:

producing a flux linkage reference modifier based on a comparison of the sum of the $\alpha$ and $\beta$ switching times and the switching period of the modulator; and
using the flux linkage reference modifier to modify a flux reference used to control the AC machine.

**7.** A method according to any previous claim, wherein the method is performed whilst operating the AC machine in a field weakening region.

**8.** A method according to any previous claim, wherein the method includes:

observing a stability parameter that is indicative of the stability of the AC machine and dependent on a current state of the AC machine; and
controlling the AC machine based on the observed stability parameter so as to promote stable operation of the AC machine.

**9.** A method according to claim 8, wherein the stability parameter is defined as $K$ or a parameter which is derived from $K$, where:

$$K = \frac{3P}{4L_d L_q} [\, 2\lambda_f L_q \cos\delta - 2|\lambda_s| \,(L_q - L_d\,)\cos 2\delta \,]$$

$\lambda_S$ is the flux linkage of the stator;
$\lambda_f$ is the flux linkage of a permanent magnet of the AC machine;
$\delta$ is a phase angle between an axis of a 2D reference frame that is defined to be fixed with respect to the rotor and an axis of a 2D reference frame that is defined to be fixed with respect to the flux linkage of the stator for a given state of operation of the AC machine;
$P$ is number of pole pairs in the AC machine;
$L_d$ is d-axis inductance of the AC machine;
$L_q$ is q-axis inductance of the AC machine.

**10.** A method according to any previous claim, wherein the method includes controlling the AC machine to operate as a motor, as a generator or, at separate times, as both a motor and a generator.

**11.** A method according to any previous claim, wherein the AC machine is a permanent magnet machine in which one or more permanent magnets are included in the rotor.

**12.** A method according to any previous claim, wherein the method is a permanent magnet synchronous machine.

**13.** A controller for controlling an AC machine that includes a stator and a rotor, wherein the controller is configured to carry out the method according to any preceding claim, whilst operating the AC machine in a field weakening region according to an overmodulation technique.

**Patentansprüche**

**1.** Verfahren zum Steuern einer Wechselstrommaschine, die einen Stator und einen Rotor umfasst, wobei das Verfahren Folgendes umfasst, während die Wechselstrommaschine gemäß einem Übermodulationsverfahren betrieben wird:

Bestimmen einer Bezugsdrehzahl ($\omega^*_s$) zum Steuern des Betriebs der Wechselstrommaschine;
Filtern der Bezugsdrehzahl derart, dass, wenn die Bezugsdrehzahl ($\omega^*_s$) eine Drehzahlgrenze ($\omega_{s(max)}$) der Wechselstrommaschine überschreitet, die Bezugsdrehzahl ($\omega^*_s$) in Richtung dieser Drehzahlgrenze reduziert wird; und
Steuern des Betriebs der Wechselstrommaschine basierend auf der gefilterten Bezugsdrehzahl ($\omega^*_{s(lim)}$), wobei das Steuern des Betriebs der Wechselstrommaschine basierend auf der gefilterten Bezugsdrehzahl ($\omega^*_{s(lim)}$) Folgendes umfasst:

Erzeugen einer Bezugsspannung ($v^*_y$) basierend auf der gefilterten Bezugsdrehzahl; und
Steuern des Betriebs der Wechselstrommaschine basierend auf der Bezugsspannung ($v^*_y$); und

wobei die Bezugsspannung ($v^*_y$) durch Multiplizieren der gefilterten Bezugsdrehzahl ($\omega^*_{s(lim)}$) mit einer Flussverkettung ($\lambda^*_s$) erhalten wird.

2. Verfahren nach Anspruch 1, wobei das Bestimmen der Bezugsdrehzahl auf einem Vergleich zwischen einem überwachten Drehmoment der Wechselstrommaschine und einem Bezugsdrehmoment basiert.

3. Verfahren nach einem der vorhergehenden Ansprüche, wobei das Verfahren das Steuern des Betriebs der Wechselstrommaschine basierend auf der Übertragungsfunktion des geschlossenen Regelkreises:

$$T = \frac{K_p s + K_i}{\frac{1}{K}s^2 + K_p s + K_i}\left\{ T^* - \frac{s + K_a K_i}{K_p s + K_i}\left(\omega_s^* - \omega_{s(\lim)}\right)\right\}$$

umfasst,
wobei:

$T$ = ein überwachtes Drehmoment der Wechselstrommaschine
$T^*$ = ein zum Steuern der Wechselstrommaschine verwendetes Bezugsdrehmoment
$\omega_s^*$ = die Bezugsdrehzahl
$\omega_{s(lim)}$ = die gefilterte Bezugsdrehzahl
$K_p$, $K_i$ = PI-Reglerparameter
$s$ die s-Bereichs- oder Übertragungsfunktion darstellt
$K$ = ein Stabilitätsparameter.

4. Verfahren nach einem der vorhergehenden Ansprüche, wobei das Verfahren das Steuern der Wechselstrommaschine gemäß einem Plan zur Direkten Drehmoment- und Flussregelung umfasst, wobei das Verfahren Folgendes umfasst:

Überwachen eines Drehmoments der Wechselstrommaschine;
Überwachen einer Flussverkettung des Stators der Wechselstrommaschine;
Steuern der Wechselstrommaschine basierend auf einem Vergleich zwischen dem überwachten Drehmoment und einem Bezugsdrehmoment; und
Steuern der Wechselstrommaschine basierend auf einem Vergleich zwischen der überwachten Flussverkettung und einer Bezugsflussverkettung.

5. Verfahren nach einem der vorhergehenden Ansprüche, wobei die Wechselstrommaschine gemäß einem Übermodulationsverfahren gesteuert wird, in welchem die Summe von $\alpha$- und $\beta$-Schaltzeiten zu einem Schaltzeitraum eines Modulators hin getrieben wird, der verwendet wird, um Schaltsignale zu erzeugen, die der Wechselstrommaschine über einen Wechselrichter geliefert werden.

6. Verfahren nach Anspruch 5, wobei die Summe der $\alpha$- und $\beta$-Schaltzeiten zum Schaltzeitraum des Modulators hin durch Folgendes getrieben wird:

Erzeugen eines Flussverkettungs-Bezugsmodifizierers basierend auf einem Vergleich der Summe der $\alpha$- und $\beta$-Schaltzeiten und des Schaltzeitraums des Modulators; und
Verwenden des Flussverkettungs-Bezugsmodifizierers, um einen Flussbezug zu modifizieren, der verwendet wird, um die Wechselstrommaschine zu steuern.

7. Verfahren nach einem der vorhergehenden Ansprüche, wobei das Verfahren durchgeführt wird, während die Wechselstrommaschine in einem Feldschwächebereich betrieben wird.

8. Verfahren nach einem der vorhergehenden Ansprüche, wobei das Verfahren Folgendes umfasst:

Überwachen eines Stabilitätsparameters, der ein Indikator für die Stabilität der Wechselstrommaschine ist und von einem aktuellen Zustand der Wechselstrommaschine abhängig ist; und
Steuern der Wechselstrommaschine basierend auf dem überwachten Stabilitätsparameter, um einen stabilen Betrieb der Wechselstrommaschine zu unterstützen.

**9.** Verfahren nach Anspruch 8, wobei der Stabilitätsparameter als *K* oder ein Parameter, der von K abgeleitet ist, definiert ist, wobei:

$$K = \frac{3P}{4L_d L_q} \left[\, 2\lambda_f\, L_q\, cos\delta - 2\left|\lambda_s\right| \left(L_q - L_d\right) cos 2\delta \,\right]$$

$\lambda_s$ die Flussverkettung des Stators ist;
$\lambda_f$ die Flussverkettung eines Permanentmagnets der Wechselstrommaschine ist;
$\delta$ ein Phasenwinkel zwischen einer Achse eines 2D-Bezugssystems, das definiert ist, um in Bezug auf den Rotor fixiert zu werden, und einer Achse eines 2D-Bezugssystems, das definiert ist, um in Bezug auf die Flussverkettung des Stators für einen gegebenen Betriebszustand der Wechselstrommaschine fixiert zu werden, ist;
$P$ Anzahl Pol-Paare in der Wechselstrommaschine ist;
$L_d$ d-Achseninduktivität der Wechselstrommaschine ist;
$L_q$ q-Achseninduktivität der Wechselstrommaschine ist.

**10.** Verfahren nach einem der vorhergehenden Ansprüche, wobei das Verfahren das Steuern der Wechselstrommaschine umfasst, um als Motor, als Generator oder zu getrennten Zeiten sowohl als Motor als auch als Generator zu arbeiten.

**11.** Verfahren nach einem der vorhergehenden Ansprüche, wobei die Wechselstrommaschine eine Permanentmagnetmaschine ist, in welcher ein oder mehrere Permanentmagnete im Rotor enthalten sind.

**12.** Verfahren nach einem der vorhergehenden Ansprüche, wobei das Verfahren eine Permanentmagnet-Synchronmaschine ist.

**13.** Steuergerät zum Steuern einer Wechselstrommaschine, die einen Stator und einen Rotor umfasst, wobei das Steuergerät so gestaltet ist, dass es das Verfahren nach einem der vorhergehenden Ansprüche ausführt, während die Wechselstrommaschine in einem Feldschwächebereich gemäß einem Übermodulationsverfahren betrieben wird.

## Revendications

**1.** Procédé de commande d'une machine CA qui inclut un stator et un rotor, dans lequel le procédé inclut, pendant le fonctionnement de la machine CA en fonction d'une technique de surmodulation :

la détermination d'une vitesse de référence ($\omega^*_s$) pour commander le fonctionnement de la machine CA ; la filtration de la vitesse de référence de sorte que si la vitesse de référence ($\omega^*_s$) dépasse une limite de vitesse ($\omega_{s(max)}$) de la machine CA, la vitesse de référence ($\omega^*_s$) soit abaissée vers cette limite de vitesse ;
et
la commande du fonctionnement de la machine CA sur la base de la vitesse de référence filtrée ($\omega^*_{s(lim)}$)
dans lequel la commande du fonctionnement de la machine CA sur la base de la vitesse de référence filtrée ($\omega^*_{s(lim)}$) inclut :

la production d'une tension de référence ($v^*_y$) sur la base de la vitesse de référence filtrée ; et la commande du fonctionnement de la machine CA sur la base de la tension de référence ($v^*_y$) ;
et,
dans lequel la tension de référence ($v^*_y$) est obtenue en multipliant la vitesse de référence filtrée ($\omega^*_{s(lim)}$) par une transmission de flux de référence ($\lambda^*_s$).

**2.** Procédé selon la revendication 1, dans lequel la détermination de la vitesse de référence est basée sur une comparaison entre un couple observé de la machine CA et un couple de référence.

**3.** Procédé selon l'une quelconque des revendications précédentes, dans lequel le procédé inclut la commande du fonctionnement de la machine CA sur la base de la fonction de transfert en boucle fermée :

$$T = \frac{K_p s + K_i}{\frac{1}{K}s^2 + K_p s + K_i}\left\{ T^* - \frac{s + K_a K_i}{K_p s + K_i}\left(\omega_s^* - \omega_{s(\text{lim})}\right)\right\}$$

dans lequel :

$T$ = un couple observé de la machine CA
$T^*$ = un couple de référence utilisé pour commander la machine CA
$\omega_s^*$ = la vitesse de référence
$\omega_{s(\text{lim})}$ = la vitesse de référence filtrée
$K_p, K_i$ = paramètres de régulateur PI
$s$ représente le domaine s ou la fonction de transfert
$K$ = un paramètre de stabilité.

4. Procédé selon l'une quelconque des revendications précédentes, dans lequel le procédé inclut la commande de la machine CA en fonction d'un couple direct et d'un schéma de commande de flux, le procédé incluant :

l'observation d'un couple de la machine CA ;
l'observation d'une transmission de flux du stator de la machine CA ;
la commande de la machine CA sur la base d'une comparaison entre le couple observé et le couple de référence ; et
la commande de la machine CA sur la base d'une comparaison entre la transmission de flux observée et une transmission de flux de référence.

5. Procédé selon l'une quelconque des revendications précédentes, dans lequel la machine CA est commandée en fonction d'une technique de surmodulation dans laquelle la somme des temps de commutation $\alpha$ et $\beta$ est amenée vers une période de commutation d'un modulateur utilisé pour produire des signaux de commutation qui sont délivrés à la machine CA via un convertisseur.

6. Procédé selon la revendication 5, dans lequel la somme des temps de commutation $\alpha$ et $\beta$ est amenée vers la période de commutation du modulateur en :

produisant un modificateur de référence de transmission de flux sur la base d'une comparaison de la somme des temps de commutation $\alpha$ et $\beta$ et la période de commutation du modulateur ; et
utilisant le modificateur de référence de transmission de flux pour modifier une référence de flux utilisée pour commander la machine CA.

7. Procédé selon l'une quelconque des revendications précédentes, dans lequel le procédé est exécuté pendant le fonctionnement de la machine CA dans une zone de shuntage.

8. Procédé selon l'une quelconque des revendications précédentes, dans lequel le procédé inclut : l'observation d'un paramètre de stabilité qui est indicateur de la stabilité de la machine CA
et dépendant d'un état de courant de la machine CA ; et
la commande de la machine CA sur la base du paramètre de stabilité observé de façon à promouvoir un fonctionnement stable de la machine CA.

9. Procédé selon la revendication 8, dans lequel le paramètre de stabilité est défini comme $K$ ou un paramètre qui est dérivé de $K$, dans lequel :

$$K = \frac{3P}{4L_d L_q}\left[\, 2\lambda_f L_q \cos\delta - 2\left|\lambda_s\right|\left(L_q - L_d\right)\cos 2\delta \,\right]$$

$\lambda_s$ est la transmission de flux du stator ;
$\lambda_f$ est la transmission de flux d'un aimant permanent de la machine CA ;

$\delta$ est un angle de phase entre un axe d'un cadre de référence 2D qui est défini pour être fixe par rapport au rotor et un axe d'un cadre de référence 2D qui est défini pour être fixe par rapport à la transmission de flux du stator pour un état de fonctionnement donné de la machine CA ;

$P$ est un nombre de paires de pôles dans la machine CA ;

$L_d$ est une inductance d'axe d de la machine CA ;

$L_q$ est une inductance d'axe q de la machine CA.

10. Procédé selon l'une quelconque des revendications précédentes, dans lequel le procédé inclut la commande de la machine CA pour fonctionner en tant que moteur, en tant que générateur ou, à des moments séparés, à la fois en tant que moteur et que générateur.

11. Procédé selon l'une quelconque des revendications précédentes, dans lequel la machine CA est une machine à aimant permanent dans laquelle un ou plusieurs aimants permanents sont inclus dans le rotor.

12. Procédé selon l'une quelconque des revendications précédentes, dans lequel le procédé est une machine synchrone à aimant permanent.

13. Unité de commande destinée à commander une machine CA qui inclut un stator et un rotor, dans lequel l'unité de commande est configurée pour exécuter le procédé selon l'une quelconque des revendications précédentes, pendant le fonctionnement de la machine CA dans une zone de shuntage en fonction d'une technique de surmodulation.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

201

(a)

$\omega^*$ → ⊕ →

$\hat{\omega}$

**Speed controller** 210

$I_d^*$ → ⊕ →

$I_d$

**Current controller** 212

$V_d^*$ →

**Space vector PWM** 206

$V_{FWC}$ →

(b)

Current limit circle

$V_{FWC1} < V_{FWC2} < V_{FWC3}$

Desired torque

Voltage limit ellipse

C

B

A

$V_{FWC1}$  $V_{FWC2}$  $V_{FWC3}$

Id in Pu

1

0.8

0.6

0.4

0.2

0

Iq in Pu

-1   -0.8   -0.6   -0.4   -0.2   0

Fig. 17

301

$I_d^*$ → ⊕ →

$\hat{I_d}$

**Current controller** 310

311 Max / Min

$\beta$ →

312
$V_d = V_s \cos(\beta)$
$V_q = V_s \sin(\beta)$

$V_d^*$ →

$V_q^*$ →

$v_{dc} = v_{dc-max}$

Fig. 18

401

**Hystersis Controllers**  **Switching Table** 412  **Inverter** 404  **IPM** 402

$T^*$

$\hat{T}$

$\lambda^*$

410

$\hat{\theta}$

**Voltage vectors**  $\mathbf{v}_{dc}$

**Stator currents**

$|\hat{\lambda}|$

$\hat{\lambda} = \sqrt{\hat{\lambda}_\alpha^2 + \hat{\lambda}_\beta^2}$

$\hat{\theta} = \arctan \dfrac{\hat{\lambda}_\alpha}{\hat{\lambda}_\beta}$

$\hat{\lambda}_\alpha = \int (v_\alpha - Ri_\alpha)dt + \lambda_{\alpha 0}$

$\hat{\lambda}_\beta = \int (v_\beta - Ri_\beta)dt + \lambda_{\beta 0}$

$\hat{\lambda}_\alpha, \hat{\lambda}_\beta$

**Initial rotor position**

$\hat{T}$

$\hat{T} = \dfrac{3P}{2}(\hat{\lambda}_\alpha i_\beta - \hat{\lambda}_\beta i_\alpha)$

**Flux and torque estimator**

414

Fig. 19

$v$  $y$  $q$  $\beta$

$i$  $i_q$

$\lambda_s$  $x$

$i_d$

$\delta$  $\theta_s$

$\lambda_f$

$\theta_r$  $d$

$\alpha$

Fig. 20

501

Observer    503

Controller

PMW signals

504

Inverter

$v_{ac}$

502

AC Machine

Fig. 21

Fig. 22

642

$$\left|\lambda_{ref}\right| \rightarrow \boxed{+ \; -} \rightarrow \boxed{K_{p\lambda} + \dfrac{K_{i\lambda}}{s}} \xrightarrow{v_x} \boxed{\dfrac{1}{s}} \rightarrow \left|\lambda_s\right|$$

Flux PI controller

Fig. 23

644

$$\omega_{re}\left|\lambda_s\right|$$

$$T_{ref} \rightarrow \boxed{+ \; -} \rightarrow \boxed{K_{pT} + \dfrac{K_{iT}}{s}} \rightarrow \boxed{+ \; +} \xrightarrow{v_y} \boxed{\dfrac{K}{s}} \rightarrow T$$

Torque PI controller

Fig. 24

$$\dfrac{V_{max}}{\omega_{re}}$$

622

$$V_{ref} = \dfrac{V_{dc}}{\sqrt{3}} \rightarrow \boxed{+ \; -} \rightarrow \boxed{K_{pV} + \dfrac{K_{iV}}{s}} \rightarrow \boxed{\div} \rightarrow \boxed{\diagup} \xrightarrow{\left|\Delta\lambda_{ref}\right|} \boxed{+ \; +} \rightarrow \left|\lambda_{ref}\right|_{FW}$$

Voltage PI controller

$$v_{y,ref}$$

$$\omega_{re}$$

Fig. 25

684b

$$\left|\lambda_{ref}\right|_{FW}$$

$$\left|\lambda_{ref}\right|$$

684a

$$\left|\lambda_{ref}\right|_{MTPA}$$

$$T_{ref}^* \rightarrow \boxed{\diagup} \quad \boxed{<} \rightarrow \boxed{\diagup} \; T_{max}$$

min       Max. Torque

MTPA

684c

$$T_{ref}$$

Fig. 26

"normal"
control mode

Generation mode

Use dc link controller to get torque reference and feed into
the torque controller

Note, $V_y$ is output of
the torque controller

Check

$$V_y > \frac{V_{DC}}{\sqrt{3}}$$

No

Yes

"field
weakening"
control mode

Perform field weakening

Determine T$_{max}$ and $\phi$ $_{ref}$
Ensure T$_{ref}$ < T$_{max}$ and feed into flux and torque controllers

Use state
observer to check
condition of K $^\wedge$

Is $K \leq K_{ref}?$

No

Yes

Enable K controller and continue operation
(Note, K controller will ensure K> 0 for stability)

Operation in deep field weakening region is achieved

Fig. 27

Fig. 28

Fig. 29

688

$$K_{ref} \approx 0 \longrightarrow \bigoplus \longrightarrow \boxed{K_{pK} + \frac{K_{iK}}{s}} \longrightarrow \boxed{\diagup_{0}} \longrightarrow \Delta T_{max}$$

$\hat{K}$

688a          688b

Fig. 30

Fig. 31

T (Nm)

(a)

Machine 1 using conventional FOC \ DTFC approach requires designing machine with high base speed to ensure stability is achieved in field weakening region against w_demand

*Stable region*      *Unstable region*

$\omega_{demand}$

$\omega$ (rpm)

T (Nm)

(b)

Machine 1 able to operate at higher speeds with proposed controller

Machine 2 using proposed controller to extend stability range and therefore allowing the machine to be designed with lower base speed (at reduced power)

*Extended Stable region*

$\omega_{demand}$

$\omega$ (rpm)

Fig. 32

Fig. 33

Generation mode

Use dc link controller to get torque reference and feed into the torque controller

"normal" control mode

Note, $T_S$ is switching time

Check

$T_\alpha + T_\beta > T_S$

No

Yes

Perform field weakening

Determine $T_{max}$ and $\phi$ ref
Ensure $T_{ref} < T_{max}$ and feed into flux and torque controllers

Use state observer to check condition of K ˆ

Is $\hat{K} \le K_{ref}$?

No

"field weakening" control mode

Yes

Enable K controller and continue operation
(Note, K controller will ensure K> 0 for stability)

Operation in deep field weakening region is achieved

Fig. 34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1301259 A

**Non-patent literature cited in the description**

- **D. XIAO et al.** Symposium on Sensorless Control for Electrical Drives. IEEE, 2011